# EUROPEAN PATENT SPECIFICATION

(11) **EP 0 656 588 B1**
(45) Date of publication and mention of the grant of the patent: **01.09.1999**
(21) Application number: 94118794.0
(22) Date of filing: 29.11.1994
(51) Int. Cl.: G06F 3/06

(54) **Storage device**
Speichervorrichtung
Dispositif de stockage

(30) Priority: 03.12.1993 JP 30366993
(43) Date of publication of application: 07.06.1995
(73) Proprietor: Hitachi, Ltd., Chiyoda-ku, Tokyo 101 (JP)
(72) Inventor: Kanda, Motohiro, Sakae-ku, Yokohama-shi (JP); Satoh, Takao, Sagamihara-shi (JP); Yamamoto, Akira, Sagamihara-shi (JP)
(74) Representative: Strehl Schübel-Hopf & Partner

(56) References cited:
- EP-A- 0 566 964

## Description

### BACKGROUND OF THE INVENTION

The present invention relates to a storage device, and in particular, to a storage device capable of conducting a dump process without any intervention of a CPU and capable of completely dumping, even when a data update operation is effected during a period of time from a dump start point to a dump end point, the dump objective data at the dump start point.

There has been written on pages 105 to 113 of the "draft proposed American National Standard for information system-SMALL COMPUTER SYSTEM INTERFACE-2 (SCSI-2), May 20, 1991" a function in which a dump process is conducted from a storage device to another storage device without any intervention of a CPU (called "initiator" in the SCSI standards) by use of a "COPY" command defined according to the SCSI standards.

Furthermore, there has been described in the JP-A-5-210555 a storage device having a function to dump data from a storage medium into another storage device. In the storage device, dump objective data is copied onto a CPU in a predetermined order such that the copied data is transferred by the CPU to another storage device. In a case where there occurs, due to another job executed in concurrence with the dump process, an update request for data which is dump objective data and which has not been dumped, a before image thereof is saved in a side file and the update of the pertinent data is then executed. Thereafter, the data saved in the side file is copied onto the CPU. The CPU transfers the data to the dump destination storage device at an opportunity identical to the opportunity at which the data is transferred thereto when no update request for the pertinent data is done.

Other conventional technologies related to the present invention have been described, for example, in the JP-A-57-90770 and the JP-A-1-231150.

According to the conventional technology in which the dump process is accomplished by the "COPY" command defined by the SCSI standards, the dump process can be achieved without imposing any load upon the CPU. However, in a case where a data update is effected during the dump start point to the dump end point for a region which belongs to the dump objective area of the storage medium and which has not undergone the dump process, the before image is lost. Consequently, the data update cannot be conducted during the dump start point to the dump end point, leading to a problem that the dump objective storage device cannot be used for another job process.

On the other hand, according to the conventional storage device described in the JP-A-5-210555 or EP-A-0 566 964, even when the data update is carried out during the dump start point to the dump end point, the before image is not lost. Consequently, the dump objective storage device can be used for another job process. However, since the dump process is executed with intervention of the CPU, there arises a problem of load imposed on the CPU.

### SUMMARY OF THE INVENTION

It is therefore an object of the present invention to provide a storage device capable of conducting the dump process without any intervention of the CPU and capable of completely dumping the dump objective data at the dump start point even when the data update is effected during the dump start point to the dump end point.

According to a first aspect of the present invention, a storage device having a function to dump data from a storage medium onto another storage device includes the following means. (a) Region recognizing means for discriminatingly recognizing dump objective regions of the storage medium for dumped regions undergone a dump operation and not-dumped regions not undergone a dump operation and discriminatingly recognizing the not-dumped regions for data updated regions undergone a data update operation and data not-updated regions not undergone a data update operation. (b) Data update means for updating, when a data update request is received for data in other than the data not-updated regions (i.e., dumped data or updated and not-dumped data) during a period from a dump start point to a dump end point, the pertinent data, saving, when a data update request is received for data in the data not-updated regions, the pertinent data into a buffer and updating thereafter the data in the data not-updated regions, and changing an attribute of a storage region of the data from a data not-updated region to a data updated region. (c) Data transfer means for transferring data from the data not-updated region of the storage medium for which an update request is not done or data from the data updated regions to a dump destination storage device in a predetermined sequence and changing an attribute of a storage region of the transferred data from a data not-damped region to a dumped region. (d) Saved data transfer means for transferring the data saved in the buffer to the dump destination storage device at a predetermined opportunity, changing an attribute of the storage region of the data from a not-dumped region to a dumped region, and substantially erasing the data from the buffer.

According to a second aspect of the present invention, a storage device having a function to dump data from a storage medium onto another storage device includes the following means. (a) Region recognizing means for discriminatingly recognizing dump objective regions of the storage medium for dumped regions undergone a dump operation and not-dumped regions not undergone a dump operation. (b) Data transfer means for transferring data from the not-dumped region of the storage medium to a dump destination storage device in a predetermined sequence, changing when a data update request is not done an attribute of a storage region of the transferred data from a not-dumped region to a dumped region, transferring, when a data update request is received for data in the data not-dumped regions during a period from a dump start point to a dump end point, the pertinent data with a higher priority to the dump destination storage device, and changing an attribute of a storage region of the data from a not-dumped region to a dumped region. (c) Data update means for updating, when a data update request is received for data in other than the not-damped regions during a period from the dump start point to the dump end point, the pertinent data and updating, when a data update request is received for data in the not-damped regions, the data in the not-dumped regions after the high priority transfer thereof by the means (b) above.

In the storage device according to the first aspect, a data not-update region not undergone a data update is recognized by the region recognizing means in the not-dumped regions not undergone a dump process. When an update request is issued for data in the data not-updated regions, the before image is saved and the data is updated thereafter by the data update means. Data on the storage medium as the dump source (in which data to be dumped is stored) is transferred to the dump destination storage device by the data transfer means. The data saved in the buffer is transferred to the storage device as the dump destination (in which dumped data is stored) by the saved data transfer means.

Consequently, the dump process can be executed without any intervention of the CPU; moreover, even when a data update is carried out during the dump start point to the dump end point, the dump objective data at the dump start point can be completely dumped.

In this connection, the opportunity at which the before image saved in the buffer is transferred to the dump destination storage device need only be best decided in consideration of the buffer capacity, reliability required for the dump process, and response time requirements of the update process to be executed in concurrence with the dump process.

In addition, when the buffer is duplicated, even when either one of the buffer devices fails, the data loss can be avoided. Moreover, when the buffer is nonvolatile, the data loss can be avoided in case of power failure, which hence improves reliability of the dump process.

In the storage device according to the second aspect, the not-dumped regions not undergone the dump process are recognized by the region recognizing means. Data in the not-dumped regions is transferred by the data transfer means to the dump destination storage device in a predetermined sequence. When a data update request is received for data in the not-dumped regions during the dump start point to the dump end point, the pertinent data is transferred with a higher priority to the dump destination storage device such that the data is then updated by the data update means.

Consequently, the dump process can be executed without any intervention of the CPU; moreover, even when a data update is carried out during the dump start point to the dump end point, the dump objective data at the dump start point can be completely dumped. In addition, the buffer can be dispensed with although the response time is slightly elongated.

Incidentally, when the storage area in the dump destination storage device to which the dump objective data undergone a data updated is to be transferred is commonly used for the storage area to which the pertinent data in the data not-updated regions is to be transferred when the update request is not done for the data, a storage device to which random access is possible can be used as the dump destination storage device.

On the other hand, when the storage area in the dump destination storage device to which the dump objective data is to be transferred is arranged to be next to the storage area to which another data is transferred immediately before transfer of the pertinent data, a storage device to which sequential access is possible can be used as the dump destination storage device. In this situation, when there is added to dump objective data an identifier including a logical block address (LBA) indicating a storage area on the data source storage medium in which the data is originally stored so as to transfer the data to the dump destination storage device, it is possible to restore also the position of the data. Furthermore, when the identifier includes time information, even if a before image and an after image are duplicatedly dumped, the before and after images can be discriminated from each other.

In the storage device as the dump destination, when the storage medium to store before-update or not-updated data required to be saved due to a data update request is different from the storage medium to store the other data related to the ordinary dump process, the data storage operation due to the ordinary dump process is not interrupted by the storage operation of the not-updated data, which leads to a high-speed dump process. Moreover, when the storage medium is suitable for the sequential access, an identifier containing a logical block address (LBA) is required to be added to the not-updated data to be stored on the medium. On the other hand, even when the data of the ordinary dump process is sequentially stored in the order of storage areas on the medium without such identifiers, it is possible to restore the data because two kinds of data items are stored on the different storage media as described above.

### BRIEF DESCRIPTION OF THE DRAWINGS

These and other objects and advantages of the present invention will become apparent by reference to the following description and accompanying drawings wherein:
Fig. 1 is a configuration diagram showing a computer system including a storage device as a first embodiment of the present invention;
Fig. 2 is a configuration diagram showing a before image table of the first embodiment of the present invention;
Fig. 3 is a flowchart showing the procedure of the dump process of the first embodiment of the present invention;
Fig. 4 is a flowchart showing the procedure of the COPY command process of the first embodiment of the present invention;
Fig. 5 is a flowchart showing the procedure of the WRITE command process of the first embodiment of the present invention;
Fig. 6 is a flowchart showing the procedure of the flush process of the first embodiment of the present invention;
Fig. 7 is a data flow diagram for explaining a concept of the dump process of the first embodiment of the present invention;
Fig. 8 is a configuration diagram showing a computer system including a storage device as a second embodiment of the present invention;
Fig. 9 is a flowchart showing the procedure of the dump process of the second embodiment of the present invention;
Fig. 10 is a flowchart showing the procedure of the COPY command process of the second embodiment of the present invention;
Fig. 11 is a flowchart showing the procedure of the WRITE command process of the second embodiment of the present invention;
Fig. 12 is a data flow diagram for explaining a concept of the dump process of the second embodiment of the present invention;
Fig. 13 is a configuration diagram showing the primary portion of a computer system including a storage device as a third embodiment of the present invention;
Fig. 14 is a data configuration diagram of an lba added data block;
Fig. 15 is a data flow diagram for explaining a concept of the dump process of a third embodiment of the present invention; and
Fig. 16 is a flowchart showing the procedure of the RESTORE command process.
Fig. 17 is a diagram showing the primary section of a computer system including the fourth embodiment of the storage device according to the present invention;
Fig. 18 is a flowchart showing the procedure of a dump process of the fourth embodiment;
Fig. 19 is a flowchart showing the procedure of a COPY command process of the fourth embodiment;
Fig. 20 is a flowchart showing the procedure of a WRITE command process of the fourth embodiment;
Fig. 21 is a flowchart showing the procedure of a RESTORE command process of the fourth embodiment;
Fig. 22 is a diagram showing the primary section of a computer system including a storage device according to the present invention;
Fig. 23 is a diagram showing the primary section of a computer system including another storage device according to the present invention;
Fig. 24 is a diagram showing the primary section of a computer system including still another storage device according to the present invention; and
Fig. 25 is a diagram showing the primary section of a computer system including further another storage device according to the present invention.

### DESCRIPTION OF THE PREFERRED EMBODIMENTS

Next, description will be given in detail of embodiments according to the present invention by reference to the accompanying drawings. The present invention, however, is not restricted by the embodiments, and can be modified in various manner.

### First embodiment

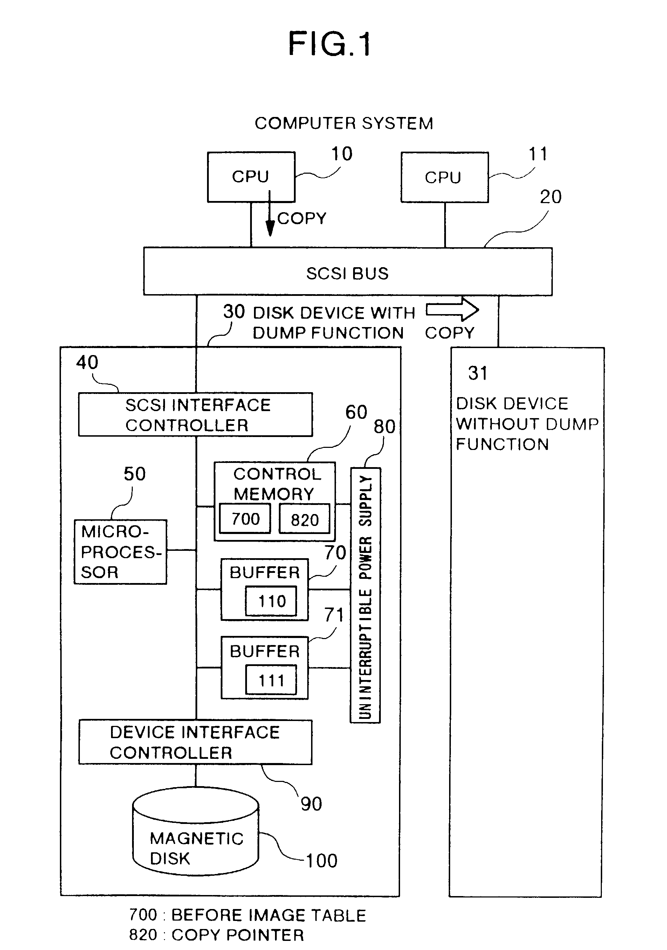

Fig. 1 is a configuration diagram showing a computer system including a storage device of a first embodiment according to the present invention.

A CPU 10 and a CPU 11 are connected via an SCSI bus 20 to a disk device 30 with dump function which is a storage device as the first embodiment of the present invention and a conventional disk device 31 without dump function. Each of the disk devices 30 and 31 is accessed in the unit of a block length of 512 bytes and has a storage capacity of 100 megabytes (MB).

In this connection, according to this embodiment, it is assumed that data is dumped in the unit of a data block from the disk device with dump function 30 onto the disk device without dump function 31. However, the present invention is not restricted by this embodiment. The dump process may be conducted, for example, in the unit of several blocks.

The disk device with dump function 30 includes an SCSI interface controller 40, a microprocessor 50, a control memory 60, and buffers 70 and 71 in the duplicated configuration, an uninterruptible power supply 80, a device interface controller 90, and a magnetic disk 100. In addition, the disk device 30 has a function in which even when "COPY command" defined by SCSI is in process, when a new command is requested, the command is appropriately processed without causing an error termination due to a device busy status

The SCSI interface controller 40 communicates various kinds of signals between the disk device with dump function 30 and the SCSI bus 20.

The microprocessor 50 controls operations of the respective sections.

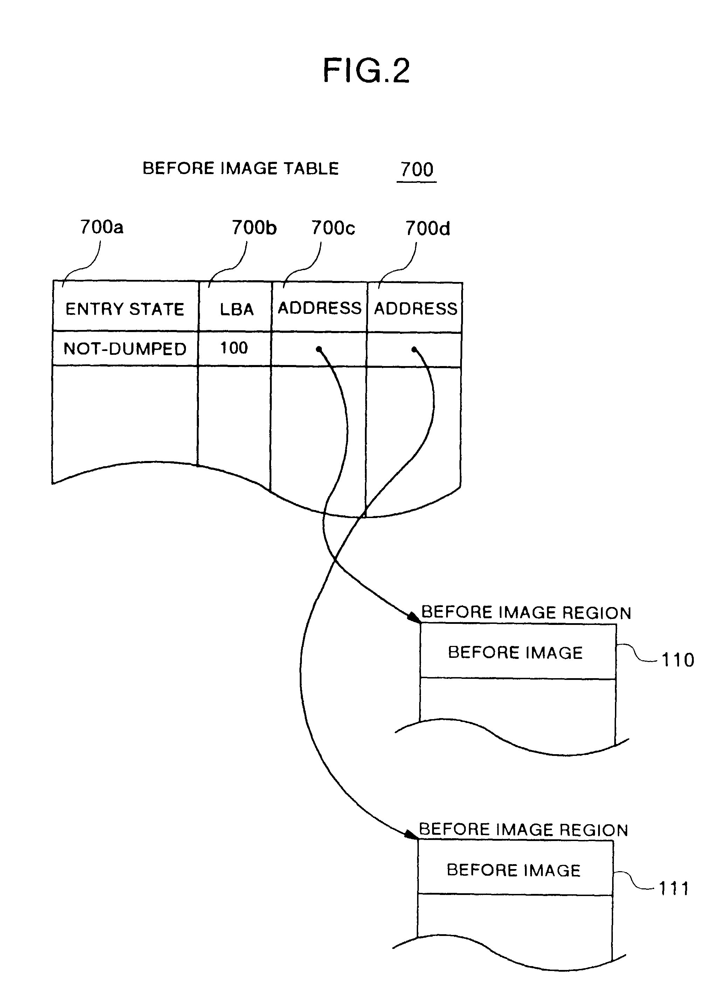

The control memory 60 is a semiconductor memory for storing therein programs and control data of the microprocessor 50 and includes a before image table 700 and a copy pointer 820. The before image table 700 will be described later by reference to Fig. 2. The copy pointer 820 is a pointer to indicates a logical block address (LBA) of a first block of a not-dumped region not undergone the dump process.

The buffers 70 and 71 are semiconductor memories for temporarily storing therein data and include before image regions 110 and 111 each having a capacity of 5120 bytes. In each of the regions 110 and 111, there can be stored up to ten before image blocks in the duplicated manner.

The uninterruptible power supply 80 continuously supplies power, even in case of power failure of a main power source (not shown) of the disk device 30, to the control memory 60 and the buffers 70 and 71 so that the semiconductor memories function as nonvolatile memories.

The device interface controller 90 communicates read data from and write data to the magnetic disk 100.

Fig. 2 is a diagram showing the configuration of the before image table 700.

The table 700 includes an entry for each group of a plurality of before image blocks kept in the before image regions 110 and 111 (Fig. 1). Each entry includes an entry state field 700a, an LBA field 700b, and before image address fields 700c and 700d.

In the entry state field 700a, there is stored either one of the states "not-used", "not-dumped", and "dumped". "Not-used" indicates that the pertinent entry is not used. "Not-dumped" denotes that before image blocks not dumped yet are kept in the before image regions 110 and 111. "Dumped" designates that before image blocks already dumped are kept in the before image regions 110 and 111.

Stored in the LBA field 700b is LBA indicating a storage area of the before image on the magnetic disk 100.

In the before image address field 700c, there is stored an address of the before image block in the before image region 110.

Stored in the before image address field 700d is an address of the before image block in the before image region 111.

In consequence, whether the dump objective data block is before or after update can be identified depending on whether or not information including LAB of the pertinent data block is stored in the table 700.

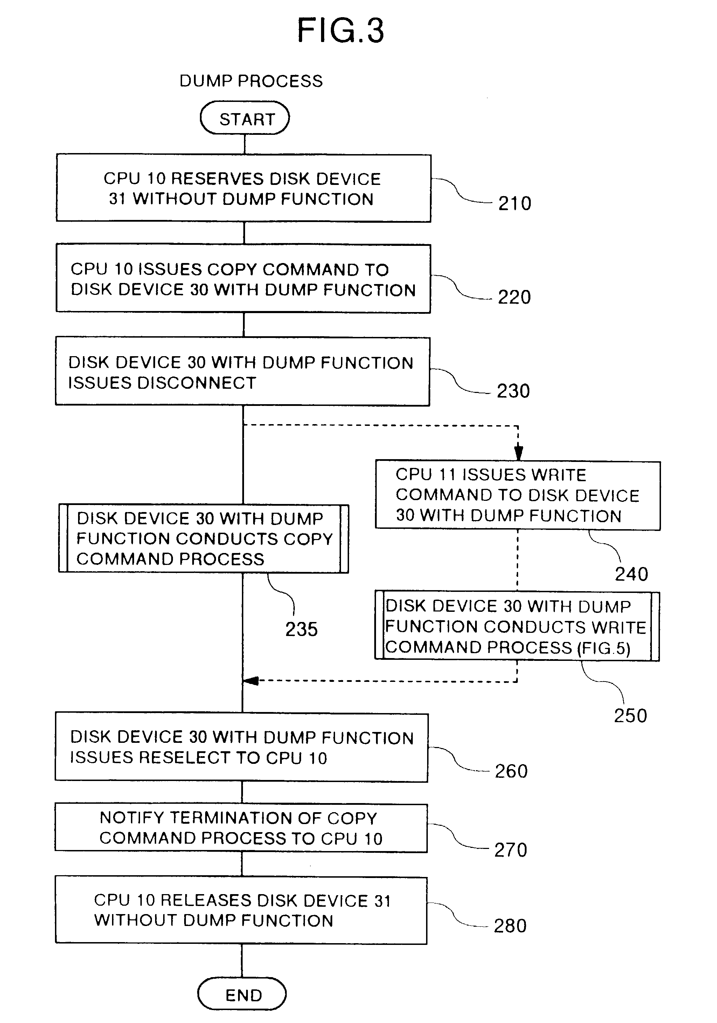

Fig. 3 is a flowchart for explaining the procedure of the dump process.

In step 210, the CPU 10 issues "RESERVE command" defined by the SCSI standards to exclusively use the disk device without dump function 31 as the dump destination, thereby inhibiting the other CPU 11 from accessing the disk device 31. However, the control of exclusive use is not effected for the disk device with dump function 30 as the dump source.

In step 220, the CPU 10 issues a COPY command to the disk device with dump function 30. In this command, there is specified that the dump operation is to be achieved from a block device to a block device; moreover, there are specified SCSI id, a logic unit number (LU), and a copy start LBA for each of the disk devices 30 and 31, and the number of data blocks to be dumped. For example, the numeric values thereof are as follows. The copy start LBA is set to "0" for each of the disk devices 30 and 31 and the number of dump blocks is specified as 100 MB/512 bytes = 204,800.

In step 230, the disk device with dump function 30 receives the COPY command from the CPU 10 and then issues "DISCONNECT command" defined by the SCSI standards to the CPU 10 to releases the connection to the SCSI bus 20 for the following reasons. Since the dump process takes a long period of time, if the connection is kept retained, the CPU 10 and the SCSI bus 20 will be kept occupied during the dump process.

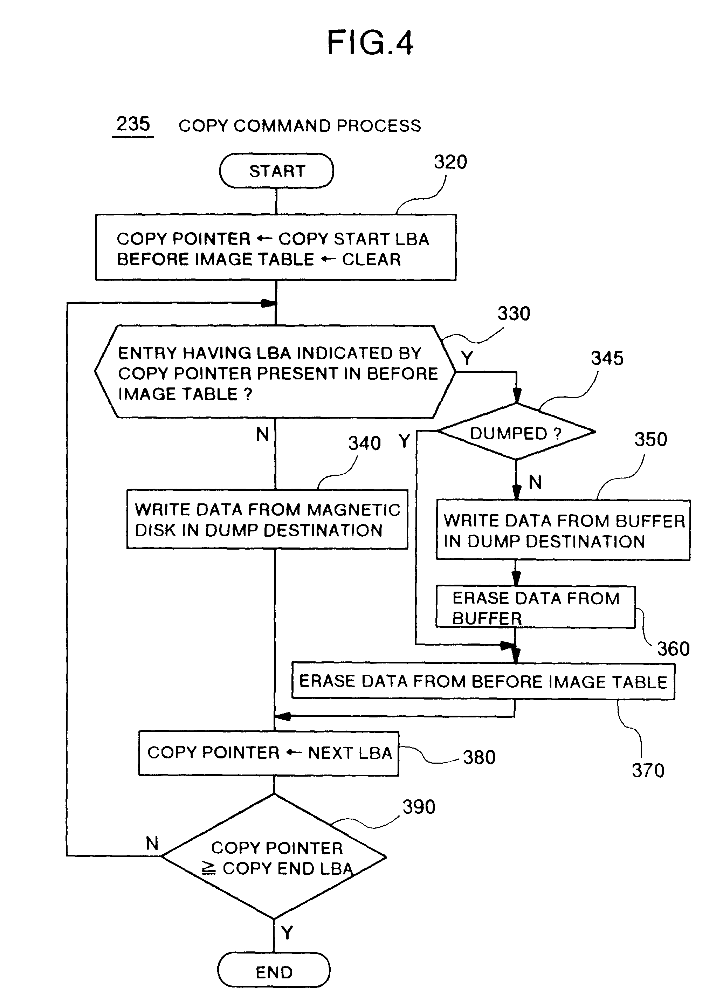

In step 235, the disk device with dump function 30 executes the COPY command process as shown in Fig. 4.

Fig. 4 is a flowchart showing the COPY command process 235.

In step 320, the copy start LBA specified by the COPY command is set to the copy pointer 820 of the control memory 60 (Fig. 1). Moreover, the entry field 700a of each entry of the before image table 700 (Fig. 2) is set to "not-used".

In step 330, a check is made through all entries of the before image table 700 to retrieve an entry of which the entry state field 700a is set to "dumped" or an entry of which the entry state field 700a is set to "not-dumped" and of which the LBA field 700b contains LBA indicated by the copy pointer 820. When such an entry is not done, control is passed to step 340; otherwise, processing proceeds to step 345. In this connection, when a data structure of a hash table, a bit map, or an index table is employed for the before image table 700, the above retrieval can be conducted at a higher speed.

In step 340, a data block corresponding to LBA indicated by the copy pointer 820 is read from the magnetic disk 100 to be transferred to the disk device without dump function 31 by "WRITE command" defined by the SCSI standards. In the WRITE command, there are specified the LU number of the disk device 31, LBA of a data block to be transferred, and the transfer length = "1 block". Control is then passed to step 380.

In step 345, a check is made for the entry state field 700a of the entry detected in step 330. If the field 700a contains "not-dumped", control is transferred to step 350. If "dumped" is contained, control is passed to step 370.

In step 350, the system reads a before image block from the before image region 110 of the buffer 70 (or a before image block from the before image region 111 of the buffer 71) indicated by the entry of "not-dumped" to transfer the data to the disk device without dump function 31 by a WRITE command. The WRITE command contains specifications of an LU number of the disk device 31, LBA of the dump destination, and the transfer length = "1 block". When the dump destination is a recording medium like the the disk device 31 suitable for random access the case of the disk device 31, LBA of the dump destination is set to match LBA of an area of the magnetic disk on which the before image block is written. As a result, the write area (position) of the before image block in the dump destination matches that of the before image block in the dump source.

In step 360, the before image block is erased from both of the before image regions 110 and 111.

In step 370, the entry state field 700a of the entry detected as "dumped" in step 330 or that of the entry indicating the before image block erased in step 360 is changed to "not-used".

In step 380, the copy pointer 820 of the control memory 60 is set to indicate LBA of the next data block.

In step 390, the copy pointer 820 is compared with the copy end LBA (= copy start LBA + number of blocks to be dumped). If the result is other than Copy pointer 820 ≧ Copy end LBA, control is returned to step 330. If Copy pointer 820 ≧ Copy end LBA, the COPY command process is terminated.

As shown in Fig. 3, steps 240 and 250 are executed in concurrence with the COPY command process.

In step 240, for example, the CPU 11 issues a WRITE command to the disk device with dump function 30 to update a data block on the magnetic disk 100. In the WRITE command, there are specified the LU number of the disk device 30, LBA of write data, and the number of write blocks.

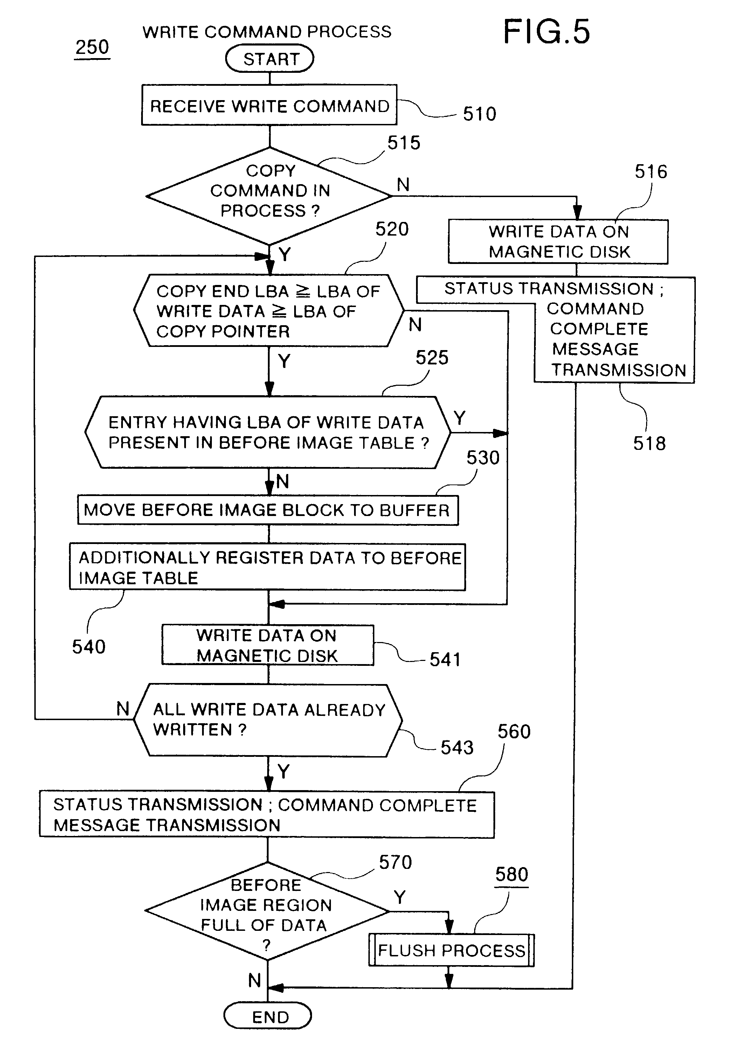

In step 250, the disk device 30 executes the WRITE command process shown in Fig. 5.

Fig. 5 is a flowchart of the WRITE command process.

In step 510, the WRITE command from the CPU 11 is received by the disk device 30.

In step 515, if a COPY command is not in process, control is passed to step 516. If a COPY command is in process, control is transferred to step 520.

In step 516, the write data specified by the WRITE command is written via the device interface controller 90 on the magnetic disk 100. This is the same as the conventional write method.

In step 518, a status byte and a command complete message are sent to the CPU 11 to report termination of the WRITE command, thereby terminating the WRITE command process.

In step 520, if there exists a relationship "LBA indicated by copy pointer 820 ≦ LBA of write objective data ≦ Copy end LBA (indicating that the write data is in the not-dumped region)", control is passed to step 525. Otherwise (indicating that the write data is not in the not-dumped region), control is transferred to step 541.

In step 525, a check is made through all entries of the before image table 700 to retrieve an entry of which the entry state field 700a is "dumped" or an entry of which the entry state field 700a is "not-dumped" and of which the LBA field 700b containing LBA including LBA of the write data. If such an entry is not done (the write data is in the data not-updated region), control is passed to step 530. If the entry is found (the write data is not in the data not-updated region), control is passed to step 541.

In step 530, a before image block containing the write data is read to be moved to the before image regions 110 and 111 respectively of the buffers 70 and 71.

In step 540, an entry corresponding to the before image block is additionally registered to the before image table 700. Specifically, the new entry is determined such that "not-dumped" is stored in the entry state field 700a thereof, LBA of the before image block is stored in the LBA field 700b thereof, and addresses of the before image blocks respectively of the before image regions 110 and 111 are stored respectively in the before image address fields 700c and 700d.

In step 541, the write data is written on the magnetic disk 100.

In step 543, a check is made to decide whether or not all write data items specified by the WRITE command have been written on the magnetic disk 100. If this is the case, control is transferred to step 560; otherwise, control is returned to step 520.

In step 560, a status byte and a command complete message are sent to the CPU 11 to report termination of the WRITE command process.

In step 570, a check is made to determine whether or not the before image regions 110 and 111 are full of data due to the before image block. If the regions 110 and 111 are full of data, control is passed to step 580; otherwise, the WRITE command process is terminated. Specifically, each entry of the before image table 700 is checked such that when the number of entries of which the entry state field 700a is set to "not-dumped" is equal to "10" (the maximum number of blocks to be contained in the before image region 110), the region is judged to be "full of data". If the number is less than ten, the region is not judged to be "full of data".

In step 580, the disk device with dump function 30 accomplishes a flush process to transfer the before image block from the buffer 70 (or the buffer 71) onto the disk device without dump function 31 so as to make the buffers 70 and 71 empty. The flush process is carried out after the command complete message is sent to the CPU 11 (in step 560) for the following reasons. Since the flush process takes a long period of time, if the flush process is first executed, the CPU 11 is occupied by the flush process until the termination thereof.

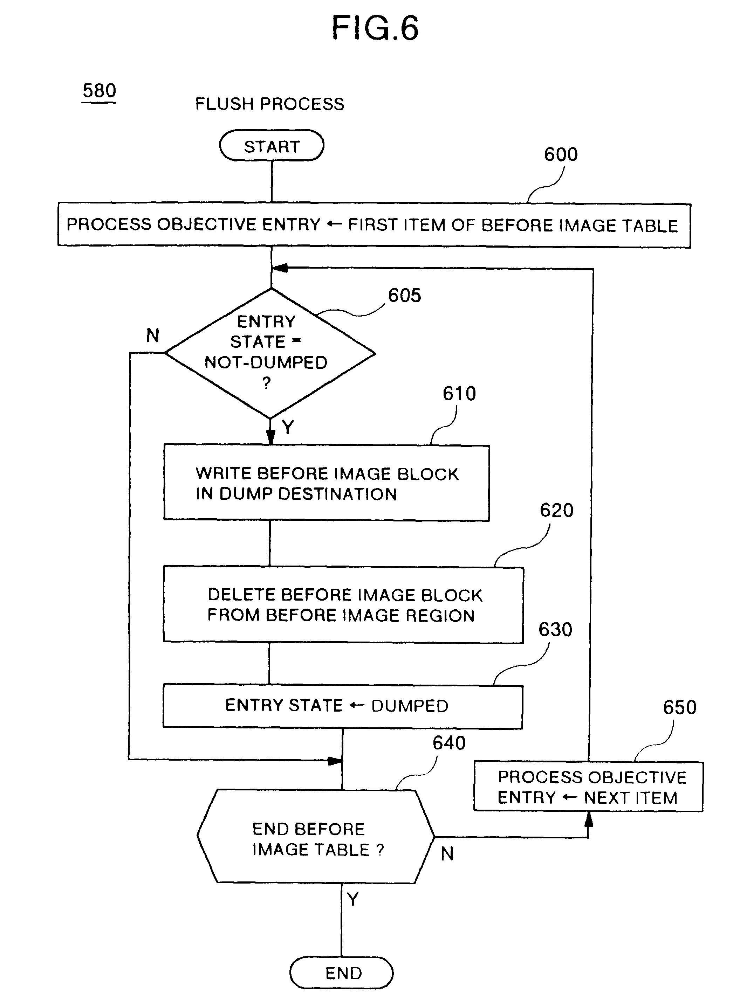

Fig. 6 shows a flowchart of the flush process.

In step 600, the first entry of the before image table 700 is specified as an entry to be processed.

In step 605, when the entry state field 700a of the entry contains "not-dumped", control is passed to step 610. When the field 700a contains "not-used" or "dumped", control is transferred to step 640.

In step 610, an access is made to the before image region 110 of the buffer 70 (the before image region 111 of the buffer 71) to read therefrom a before image block indicated by the before image address field 700c of the process objective entry. Like in step 350, the data is transferred to the disk device without dump function 31 by a WRITE command.

In step 620, the transferred before image is erased from both of the before image regions of the buffers 70 and 71, respectively.

In step 630, "dumped" is set to the entry state field 700a of an entry of the before image table 700 corresponding to the before image.

In step 640, when the process objective entry is the last entry of the before image table 700, the flush process is terminated; otherwise, control is passed to step 650.

In step 650, the process objective entry is set to the next entry and then control is passed to step 605.

As shown in Fig. 3, in step 260, the disk device with dump function 30 issues "RESELECT" defined by the SCSI standards to the CPU 10 to establish connection to the SCSI bus 20 again.

In step 270, the disk device with dump function 30 sends a status byte and a command complete message to the CPU 10 to report termination of the COPY command process.

In step 280, the CPU 10 receives the termination indication of the COPY command process and then issues "RELEASE command" to the disk device without dump function 31 to end the exclusive use.

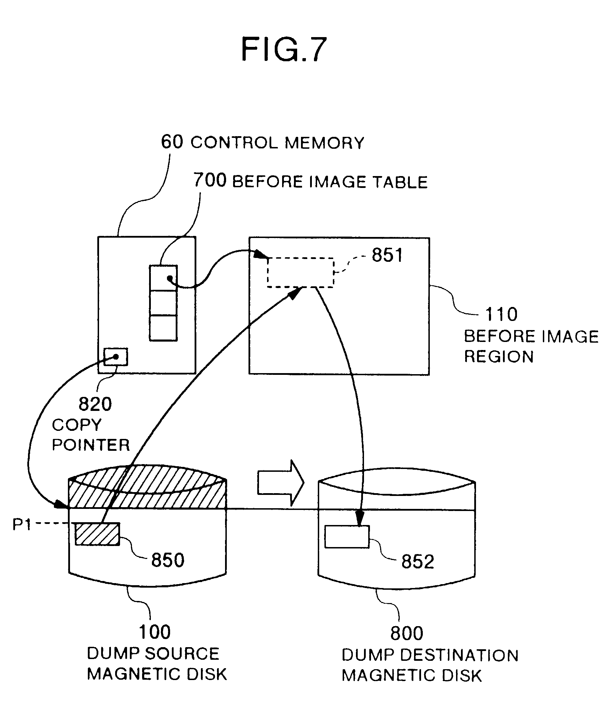

Fig. 7 is a conceptual diagram schematically showing the above operations.

The disk device with dump function 30 transfers, while sequentially changing the value of the copy pointer in the block-by-block manner from the dump start LBA of the dump objective area of the dump source magnetic disk 100 to the dump end LBA thereof, the pointed data block to an area of the same LBA on the dump destination magnetic disk 800.

In consequence, using LBA indicated by the copy pointer 820 as a point of demarcation, the dumped region is discriminated from the not-dumped region.

When a WRITE command is received during a period of time from the dump start point to the dump end point (during the COPY command process), the before image 850 corresponding to the write data is saved in an area 851 of the before image region 110 (and the before image region 111).

At earlier one of an opportunity when the copy pointer 820 is updated to LBA corresponding to a region P1 in which the before image 850 is contained and an opportunity when the before image region 110 becomes full of data, the before image 850 saved in the area 851 in the before image region 110 (or 111) is transferred to an area 852 on the dump destination magnetic disk 800.

According to the disk device with dump function 30 in the first embodiment, the dump process can be carried out without any intervention of the CPU. Moreover, even when a data update is conducted during a period of time from the dump start point to the dump end point, the dump objective data at the dump start point can be completely dumped.

Furthermore, since the buffers 70 an 71 are configured in a duplicated structure, even when either one of the buffers fails, it is possible to avoid data loss. In addition, since the uninterruptible power supply 80 makes the buffers 70 and 71 nonvolatile, the data loss can be avoided in case of power failure, thereby improving reliability of the dump process.

The first embodiment may be modified as follows.
① In the first embodiment, the opportunity at which the data saved in the buffer is transferred to the dump destination storage device is earlier one of when the pertinent data is to be transferred to the dump destination storage device because the buffer becomes full of data and when the pertinent data is to be transferred to the dump destination storage device in case an update request is not done for the pertinent data. However, there may be simply employed an opportunity when the quantity of used buffer areas exceeds a predetermined value (for example, 80% of the buffer capacity). In this case, even when LBA indicated by the copy pointer 820 exists in the before image table 700 (step 330) in the COPY command process (Fig. 4), control is advanced to step 380 without conducting the data write operation in the dump destination such that the flush process (Fig. 6) need only be accomplished only at an opportunity when the quantity of used buffer areas exceeds a predetermined value.
② In the first embodiment, each of the before image regions 110 and 111 has a storage capacity of ten data blocks. However, when each buffer has a sufficiently large storage capacity, the opportunity at which the data saved in the buffer is transferred to the dump destination storage device may be simply set such that the opportunity to transfer the pertinent data to the dump destination storage device appears at a predetermined interval of time (for example, an interval of 30 seconds), the opportunity to transfer the pertinent data to the dump destination storage device may take place when an update request for the data is not done, or the opportunity to transfer the pertinent data to the dump destination storage device may be set to any point of time during a period of time from immediately after when the data is saved in the buffer to immediately before termination of an update request for the data.
③ In the first embodiment, each of the before image regions 110 and 111 has a fixed storage capacity. However, the storage capacity may be increased according to the storage quantity of before image data. In this case, the opportunity at which the data saved in the buffer is transferred to the dump destination storage device can be selected in the same way as for the case ② above.
④ In the first embodiment, the flush process is carried out during the WRITE command process (Fig. 5). However, the flush process may be independently executed asynchronously with respect to the WRITE and COPY command processes.
⑤ In the first embodiment, the disk device 31 is adopted as the dump destination storage device. However, there may be used storage media other than the disk device 31.
⑥ In the first embodiment, the SCSI interface 40 is used. In place thereof or in addition thereto, an interface other than the SCSI interface may be used.
⑥ In the first embodiment, the disk device of the dump source is separated from that of the dump destination; however, the dump destination storage medium may be disposed in a disk device with dump function 30 (Fig. 1). For example, in addition to the magnetic disk 100, the dump destination storage device may be connected to the device interface section 90.

### Second embodiment

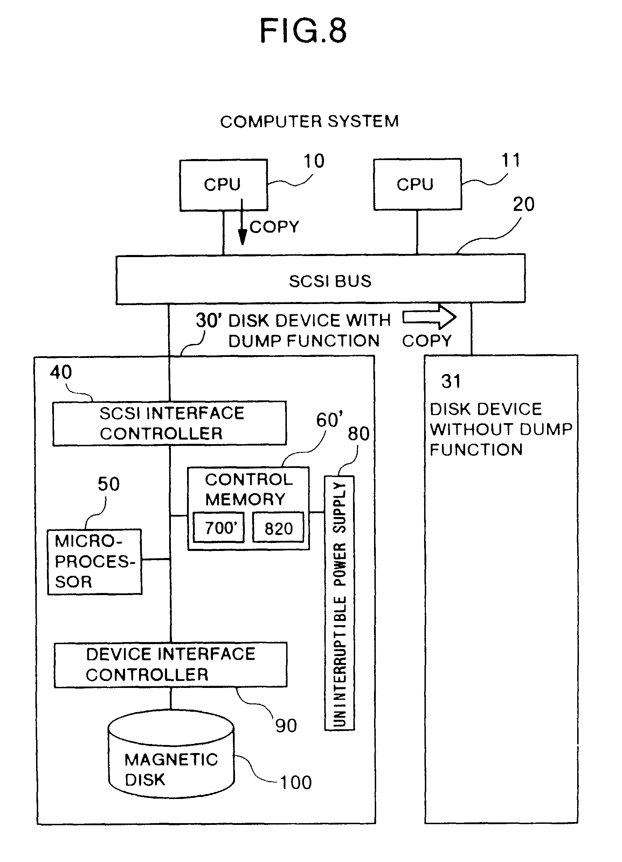

Fig. 8 is a configuration diagram showing the primary portion of a computer system including a storage device as a second embodiment according to the present invention.

A disk device with dump function 30' as the second embodiment of the storage device of the present invention is basically configured by removing the buffers 70 and 71 from the disk device with dump function 30 as the first embodiment and disposing a control memory 60' in place of the control memory 60 of the first embodiment, the control memory 60' being slightly different from the control memory 60.

The control memory 60' is a semiconductor memory for storing therein programs and control data of the microprocessor 50 and includes a dumped image table 700' and a copy pointer 820. The dumped image table 700' is a table for keeping therein LBA of a data block which is dumped with a higher priority than an ordinary dump sequence. The copy pointer 820 is a pointer to indicate LBA of the first block of a not-dumped region not undergone the dump process.

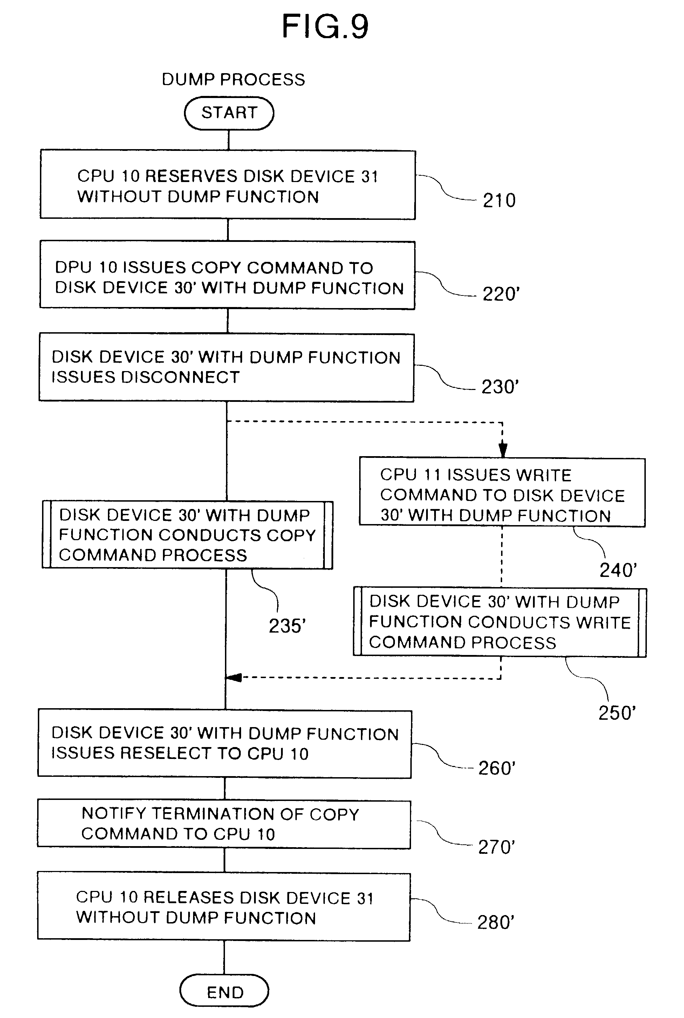

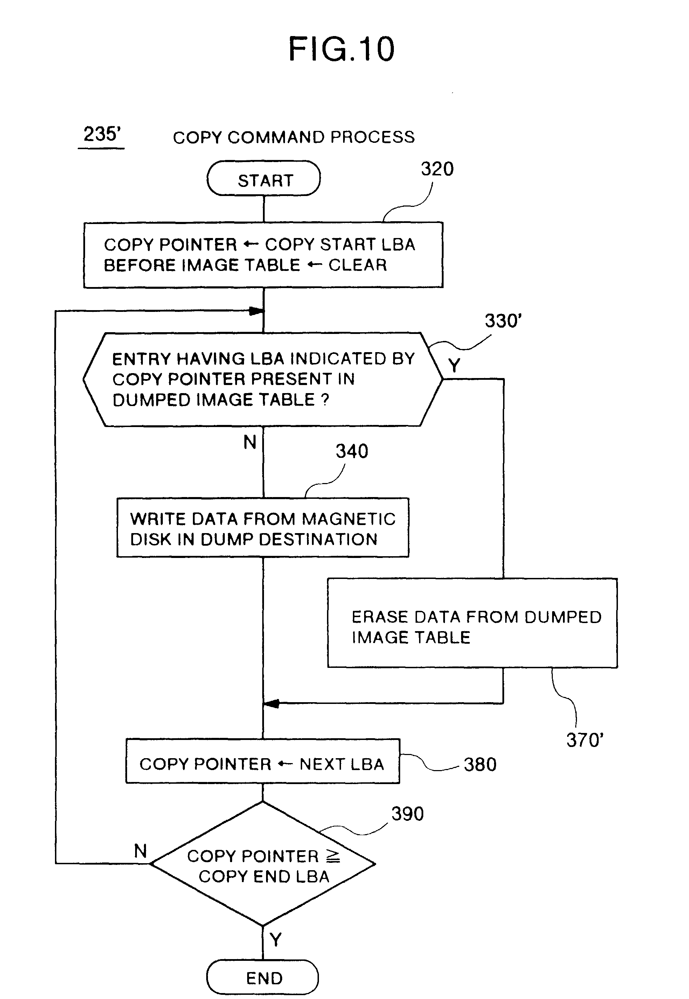

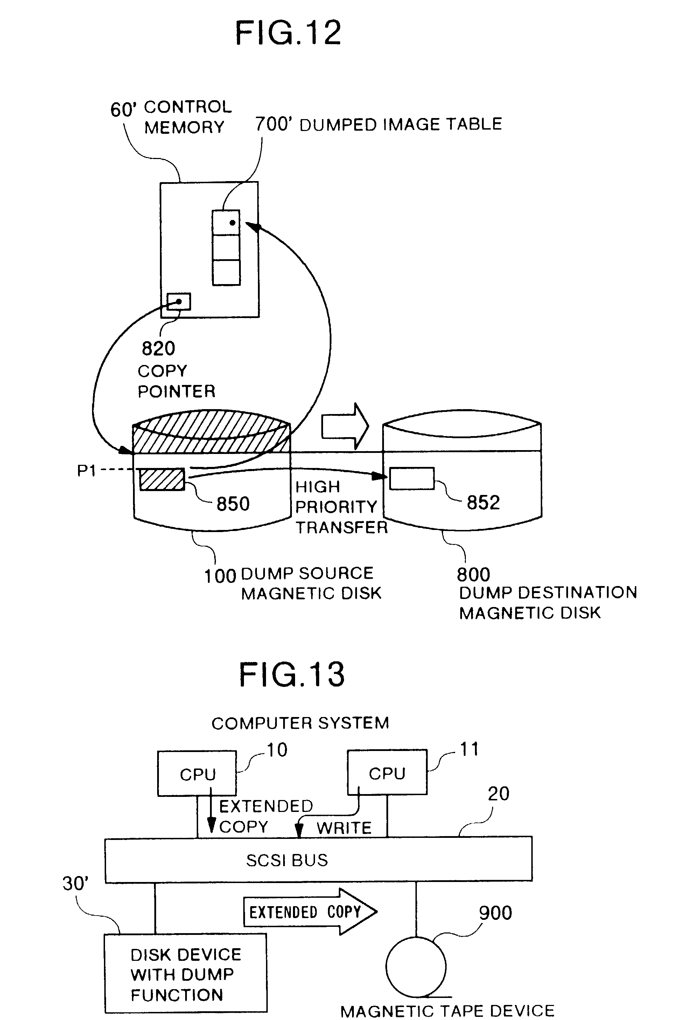

Fig. 9 to 11 are flowcharts showing the dump process, COPY command process, and WRITE command process of the disk device with dump function 30'. Moreover, Fig. 12 is a conceptual diagram schematically showing operation of the disk device 30'.

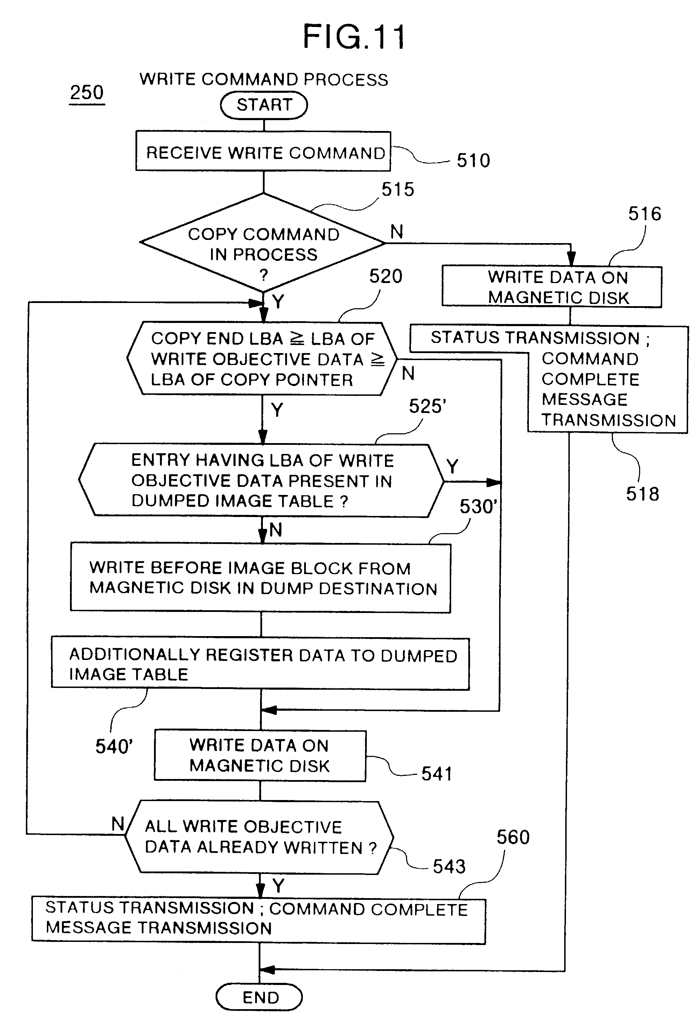

As can be seen from Figs. 9 to 12, in the disk device with dump function 30', when a data update request is received for data in the not-dumped region, the data is transferred with a higher priority to the disk device without dump function 31 as the dump destination to thereafter update the data. That is, when a WRITE command for data in the not-dumped region is received from the CPU 11 during the dump process, a before image thereof is read with a higher priority from the magnetic disk 100 to be transferred to the disk device 31. The write objective data is then written on the magnetic disk 100 and notifies completion of the WRITE command to the CPU 11. In addition, as shown in step 540' of Fig. 11, LBA of the data block of the data dumped with a higher priority is registered to the dumped image table 700' to skip the dump process in the ordinary sequence.

According to the disk device with dump function 30' of the second embodiment, although the response time of the WRITE command is elongated, the buffers 70 and 71 become unnecessary and the configuration is simplified. Furthermore, after the WRITE command is finished, the before image data and the after image data are stored in the disk device, which avoids the data loss, for example, due to power failure. In consequence, there can be obtained a highly reliable system at a low cost.

### Third embodiment

Fig. 13 is a configuration diagram showing the main portion of a computer system including a storage device as a third embodiment according to the present invention.

A CPU 10 and a CPU 11 are connected via an SCSI bus 20 to a storage device with dump function 30'' as a third embodiment according to the present invention and a magnetic tape device 900. The device 900 supports access to each data block.

Although the disk device with dump function 30'' and the disk device with dump function 30 of the first embodiment have substantially the same construction, the difference therebetween resides in that there are supported "extended COPY command" to add LBA of a dump destination to a data block to be dumped and "RESTORE command" to restore the data block of the dump destination in the dump source.

Next, the procedure of the dump process will be described.

First, the CPU 10 issues an extended COPY command to the disk device with dump function 30'' to dump data blocks from a magnetic disk (included in the disk controller 30 of Fig. 13) as the dump source onto the magnetic tape device 900 as the dump destination.

The disk device 30'' executes a dump process similar to that of Fig. 3. That is, the similar processing is executed by replacing "disk device without dump function 31" of Fig. 3 with "magnetic tape device 900", "disk device with dump function 30" with "disk device with dump function 30", "COPY command" with "extended COPY command", and "COPY command process" with "extended COPY command process")

The extended COPY command process is similar to that of Fig. 4 (in steps 340 and 350 of Fig. 4, an lba added data block in which LBA of the dump source is added to the data block is written in the dump destination).

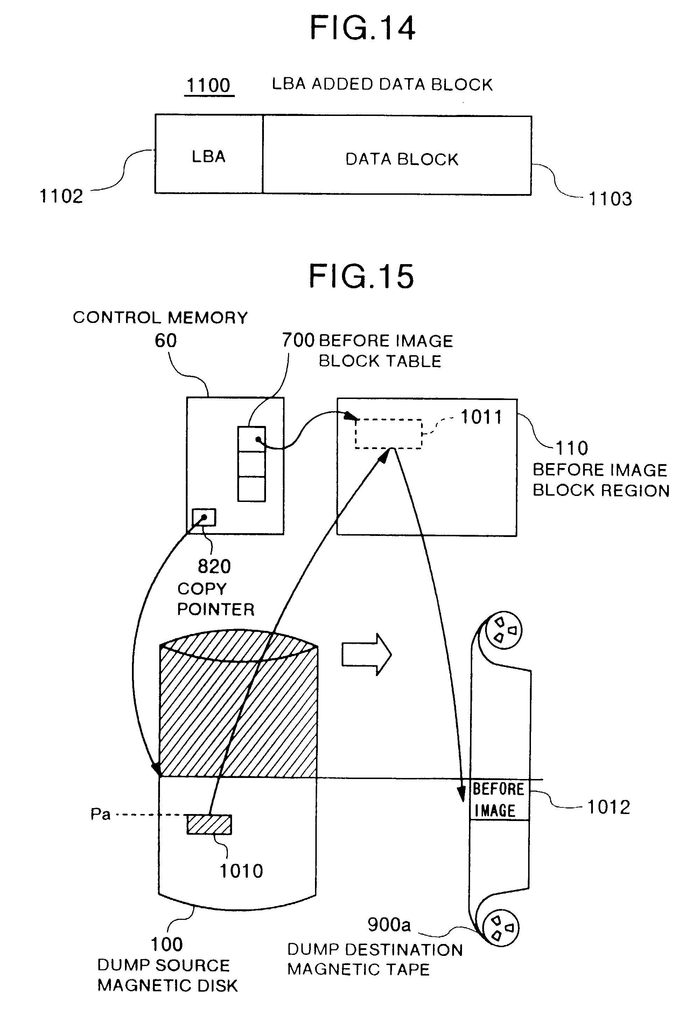

Fig. 14 shows an example of the lba added data block.

The lba added data block 1110 (having a length of, for example, 516 bytes) is constituted with LBA 1102 of the dump source and a data block 1103 (having a data length of, for example, 512 bytes).

The WRITE command process for the WRITE command received during the extended COPY command process is similar to that of Fig. 5 (replace "COPY command process" of Fig. 5 with "extended COPY command process").

The flush process is similar to that of Fig. 6 (in step 610 of Fig. 6, the lba added data block is written in a storage area next to a storage area to which another data block is transferred immediately before transfer of the data block).

Fig. 15 is a conceptual diagram schematically showing operation of the disk device with dump function 30".

While sequentially moving the copy pointer 820 of the control memory 60 in a block-by-lock manner from the first LBA of the dump source magnetic disk 100, the lba added data block in which LBA is added to the pointed data block is sequentially written on the magnetic tape 900a as the dump destination. In the diagram, hatched portions indicate dumped regions.

When a WRITE command is received during a period of time from the dump start point to the dump end point (i.e., during the extended COPY command process), the before image block 1010 is saved in an area 101 of the before image region 110. The address of the area 1011 is stored in the before image table 700. For the buffer 71, the same operation is conducted in a duplicated fashion.

At earlier one of an opportunity when the copy pointer 820 is updated to LBA corresponding to the area Pa in which the before image block 1010 is written and an opportunity when the before image region 110 becomes full of data, the lba added data block in which LBA is added to the saved before image block 1010 is written in the area 1012 of the magnetic tape 900a. The area 1012 immediately follows the previous write area, and LBA corresponding to the area 1012 is not related to LBA of the before image block 1010. Consequently, the LBA must be added to each data block.

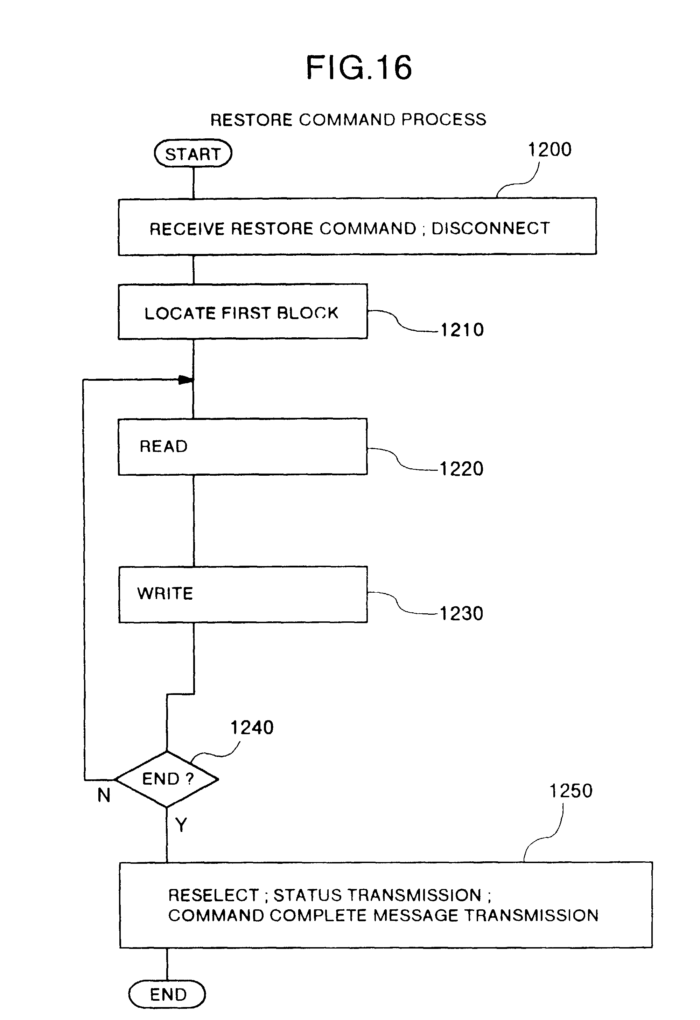

Fig. 16 is a flowchart showing the RESTORE command process by the disk device with dump function 30". The RESTORE command is executed according to indication from the user.

In step 1200, when a RESTORE command is received from the CPU 10, "DISCONNECT" is immediately issued to the CPU 10 to release the connection to the SCSI bus 20.

In step 1210, "LOCATE command" is issued to the magnetic tape device 900 to locate the first write position of the magnetic tape 900a.

In step 1220, a READ command is issued to the magnetic tape device 900 to move an lba added data block to the buffer 70 (or the buffer 71).

In step 1230, a WRITE command is issued to the magnetic disk 100 to write only the data block of the lba added data block 1100 in the LBA area. Thanks to this provision, even when the data blocks written on the magnetic tape 900a are not arranged in the write sequence thereon, the data block can be restored in an area (position) corresponding to the original LBA on the magnetic disk 100.

In step 1240, a check is made to decide whether or not all lba added data blocks written on the magnetic tape 900a have been read therefrom. The last block is decided by LBA to which a particular value is beforehand set. If this is the case, control is passed to step 1250; otherwise, control is returned to step 1220.

In step 1250, "RESELECT" is issued to the CPU 10 to send a status and a command complete message, thereby terminating the RESTORE command.

According to the disk device with dump function 30'' as the third embodiment, an lba added data block in which LBA of the dump source is added to a data block is dumped onto the magnetic tape 900a. Consequently, even when LBA of the dump source is not related to the write area of the magnetic tape 900a, the data block specified as the dump object at the dump start point can be completely dumped without losing information of the original area (position) of the data block. Moreover, using the lba added data block of the dump destination, it is possible to restore the data block in an area corresponding to the original LBA. Consequently, the data block as the dump object at the dump start point can be completely dumped.

The third embodiment can be modified as follows.
① When there are added to each lba added data block such timestamps as "update time" and "dump time" of the data block, the data block at the dump start point can be identified among a plurality of lba added data blocks. Consequently, even in the regions which have been recognized as dumped regions in the flush process, the dump process can be conducted again in the same LBA sequence.
② When there are added to each lba added data block such timestamps as "update time" and "dump time" of the data block, the data block at the dump start point can be identified among a plurality of lba added data blocks. In consequence, at a point of time to dump the data in the updated regions, the after image block may be transferred from a magnetic disk to the dump destination without paying attention to the before image block saved on the buffer. Thereafter, at an appropriate opportunity (for example, in a flush process), the before image block saved in the buffer can be transferred therefrom to the dump destination.
   According to variations ① and ② above, the extended COPY command process and the flush process can be executed in a completely independent manner (without using a data structure including a buffer shared between the two processes).
③ Moreover, the third embodiment can be modified in the same manner as for the first embodiment.

According to the storage device of the present invention, the dump process can be achieved without any intervention of the CPU. Moreover, even when the dump process is conducted during a period of time from the dump start point to the dump end time, the dump objective data at the dump start point can be completely dumped. In consequence, usability of the storage device can be improved.

### Fourth Embodiment

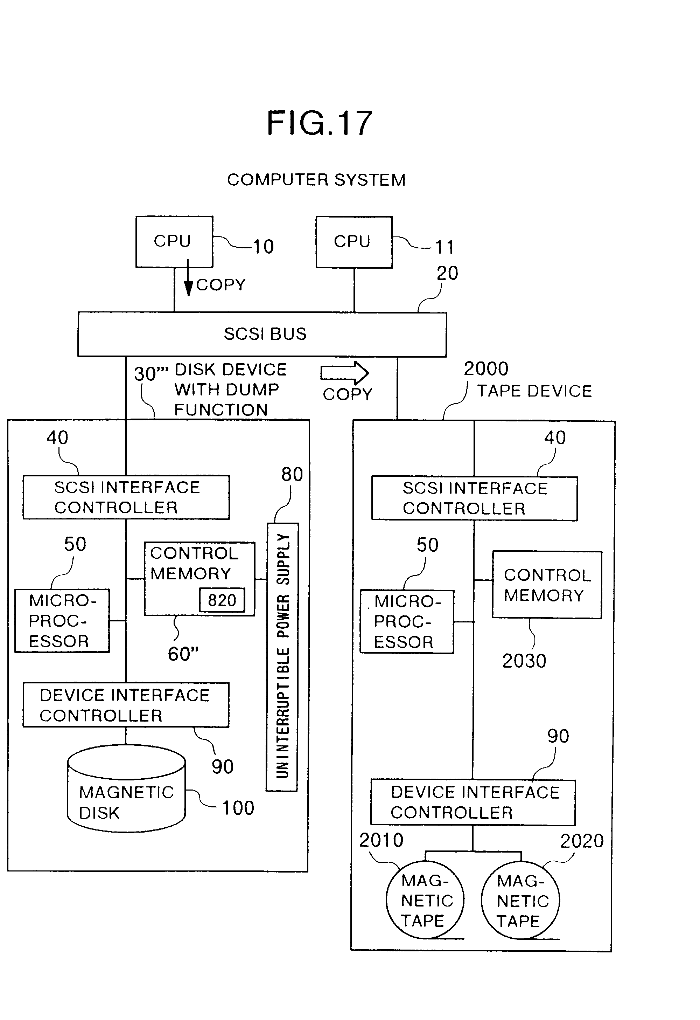

Fig. 17 shows the primary section of the computer system including a fourth embodiment of the storage device according to the present invention.

In the fourth embodiment, a disk with dump function 30''' is configured basically in the same fashion as for the disk with dump function 30' of the second embodiment. The disk device 30''' however includes a control memory 60'' slightly different from the control memory 60' of the disk device 30'.

The control memory 60'' is a semiconductor memory to store programs and control data of the microprocessor 50 and includes a copy pointer 820. Unlike the control memory 60' of the disk device with dump function 30' of the second embodiment, the control memory 60'' is not provided with the dumped data table 700'.

A tape device 2000 includes an SCSI interface controller 40, a microprocessor 50, a control memory 2030, a device interface controller 90, and magnetic tapes 2010 and 2020. The control memory 2030 is a semiconductor memory to store programs and control data of the microprocessor 50.

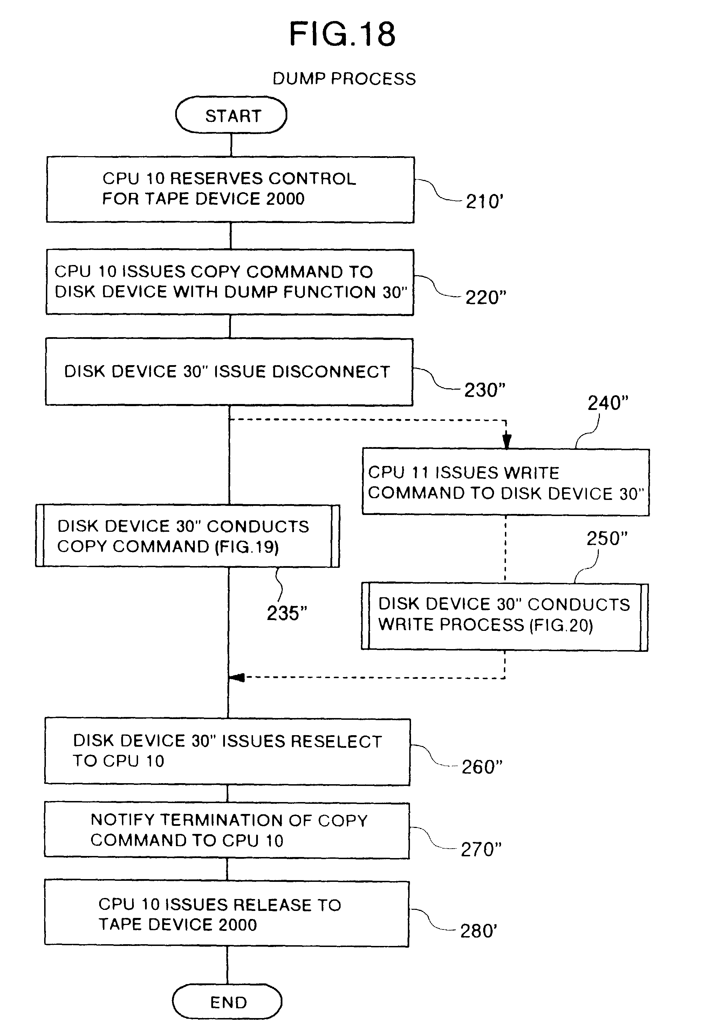

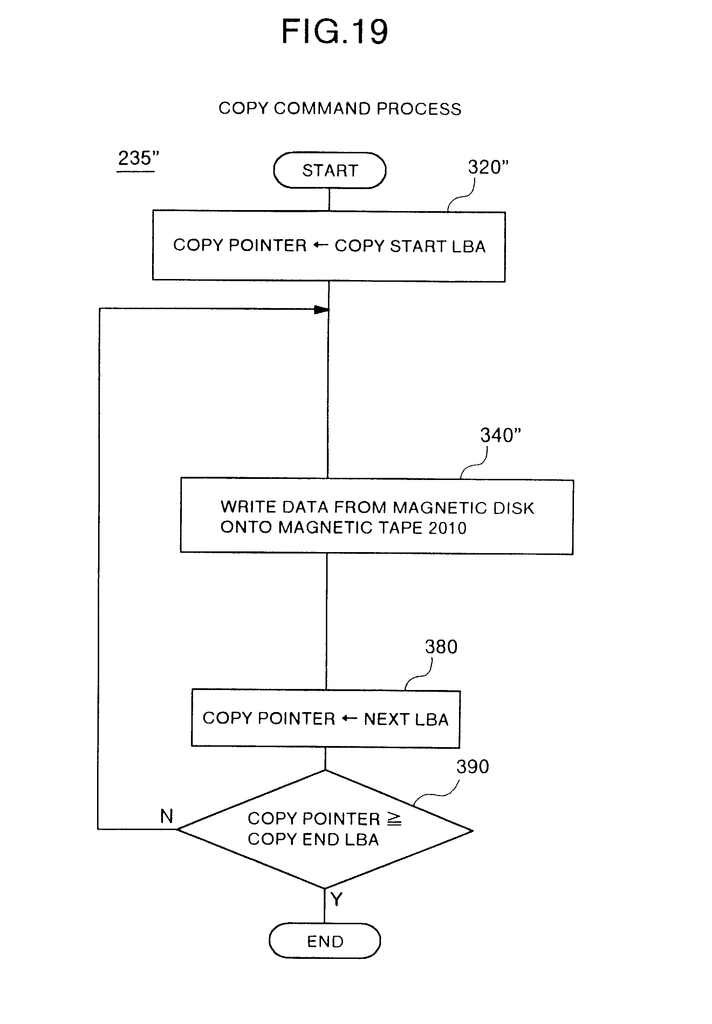

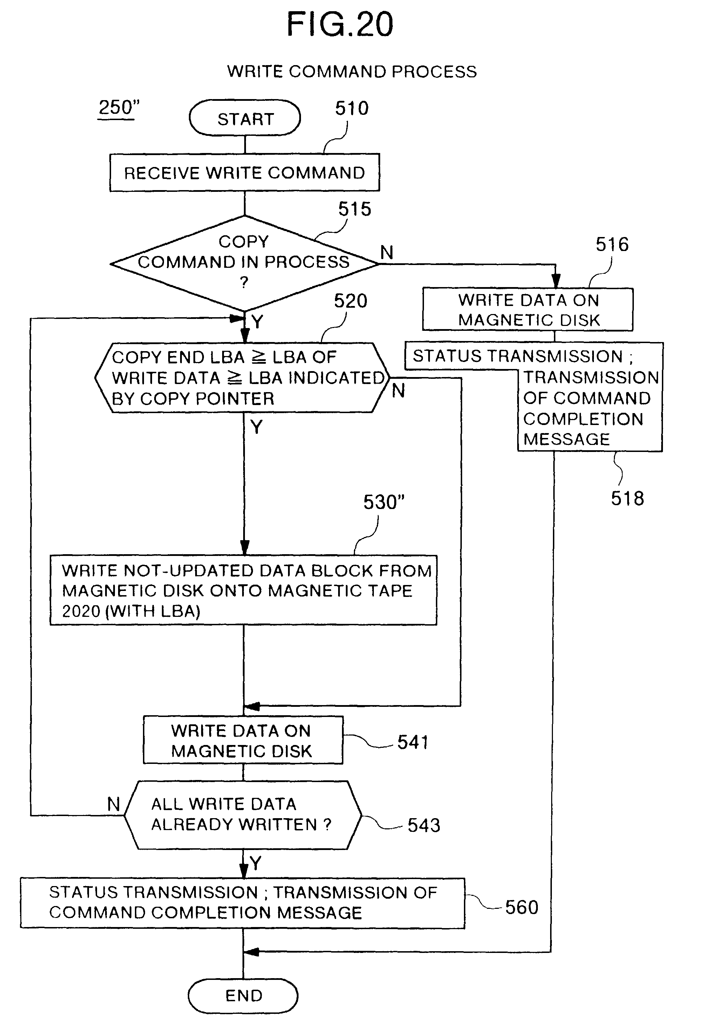

Figs. 18 to 20 are flowcharts respectively showing the dump process of the disk device with dump function 30''' and operations of the COPY and WRITE command processes.

As can be seen from Figs. 18 to 20, in the disk device 30''', when a data update request is received for data in the not-dumped region during a period of time from the start of dump process to the end of dump process, the pertinent data is transferred with a higher priority onto the magnetic tape as the dump destination and thereafter the data is updated. That is, when a WRITE command is received from the CPU 11 for data in the not-dumped region, the not-updated data is read with a higher priority from the magnetic disk 100. An LBA of the data is then added thereto and the resultant data is transferred to the magnetic tape 2020 to be written thereon. The write objective data is written on the magnetic disk 100 and then termination of the WRITE command is notified to the CPU 11.

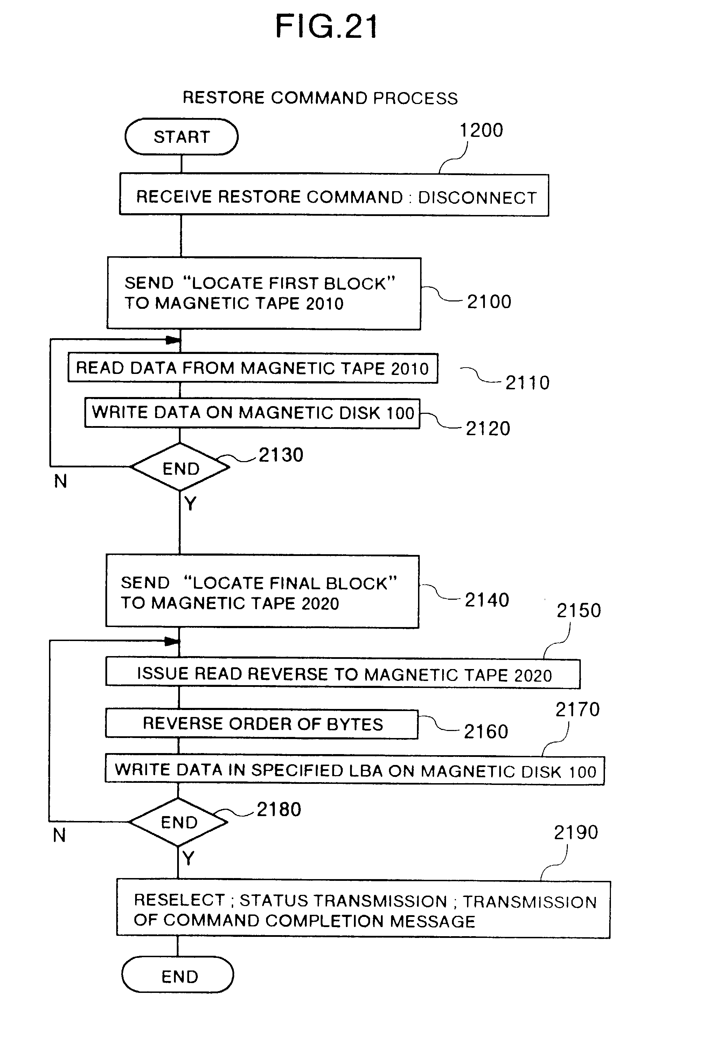

On the other hand, in the COPY command process in which operation is sequentially carried out according to the copy pointer 820, the data of the magnetic disk 100 is written on the magnetic tape 2010 disposed in addition to the magnetic tape 2020 of the not-updated data. The data does not contain any identifier such as an LBA. In the COPY command process 235'', if the objective data has been updated after the start of dump process, the updated data is written on the magnetic tape 2010. Consequently, to restore the contents of the magnetic disk 100 at the start point of dump process, the not-updated data saved on the magnetic tape 2020 is required to be reflected in the contents of the magnetic tape 2010. This is accomplished by the RESTORE command process shown in Fig. 21.

In step 1200, a RESTORE command is received from the CPU 10 and then "DISCONNECT" is issued to the CPU 10 to release the connection to the SCSI bus 20.

In step 2100, a LOCATE command is issued to the tape device 2000 to locate the first position of the magnetic tape 2010.

In step 2110, a READ command is issued to the tape device 2000 to read a block from the magnetic tape 2010.

In step 2120, a WRITE command is issued to the magnetic disk 100 to write the block thereon.

In step 2130, a check is made to decide whether or not all blocks written on the magnetic tape 2010 have been read therefrom. If the block have already read therefrom, control is passed to step 2140; otherwise, control is returned to step 2110.

In step 2140, a LOCATE command is issued to the magnetic magnetic tape 2000 to locate the final block of the magnetic tape 2020.

In step 2150, a READ REVERSE command is issued to the tape device 2000 to reversely read an LBA-added data block from the magnetic tape 2010.

In step 2160, the order of bytes obtained by the READ REVERSE command is reversed. This is because the block is reversely ready by the READ REVERSE command and the bytes are also arranged in the block in the reversed order.

In step 2170, a WRITE command is issued to the magnetic disk 100 to write only the data block of the LBA-added data block 1100 in an area of the pertinent LBA.

In step 2180, a check is made to decide whether or not all LBA-added data blocks written on the magnetic tape 2020 have been read therefrom. If all blocks have been read therefrom, control is passed to step 1250; otherwise, control is returned to step 2150.

In step 1250, "RESELECT" is issued to the CPU 10 to send a status and a command completion message thereto, thereby terminating the RESTORE command.

Description will be given of the reason why the blocks are reversely read from the magnetic tape 2020 in step 2150. In a case where an identical block is updated a plurality of times during the dump process, a plurality of not-updated data items are also written on the magnetic tape 2020. Since these data items are written thereon in the data generation order, the data item having the least block number is the data item first produced when the dump process is started. The other data items are to be ignored in the RESTORE command process. When the blocks are reversely read from the magnetic tape 2020 to be reflected in the data items on the magnetic disk 100, even if there exist a plurality of not-updated data items of an identical block, the not-updated data item having the least block number is finally selected as the valid data item.

The disk device with dump function 30''' of the fourth embodiment includes a magnetic tape to write dump data and another magnetic tape to write not-updated data. Furthermore, an LBA is added to the not-updated data item to be stored on the tape such that in the RESTORE process. The blocks are read therefrom in an order reverse to the block storing order to reflect the block data in the data of the magnetic tape on which the dump data has been written. Consequently, the data blocks to be dumped at the dump start point can be completely dumped and restored without using the not-updated data table, which is employed in the first to third embodiments. Moreover, since any additional identifier such as LBA is not required for the data blocks to be written on the magnetic tape for the dump data, the capacity of the magnetic tape is efficiently used. In this embodiment, the storage medium as the dump destination is completely sequentially accessed. Consequently, any storage medium inappropriate for the random access, for example, a magnetic tape can be used for this purpose. Even a recording medium suitable for the random access such as a disk develops a higher performance in general in the sequential access operation than in the random access operation. Consequently, the period of time necessary for the dump process can be minimized.

In the first to fourth embodiments, the connection between the CPU and the disk device and/or the tape device is effected by an SCSI bus. The connection may also be established by an enterprise systems connection (ESCON) director.

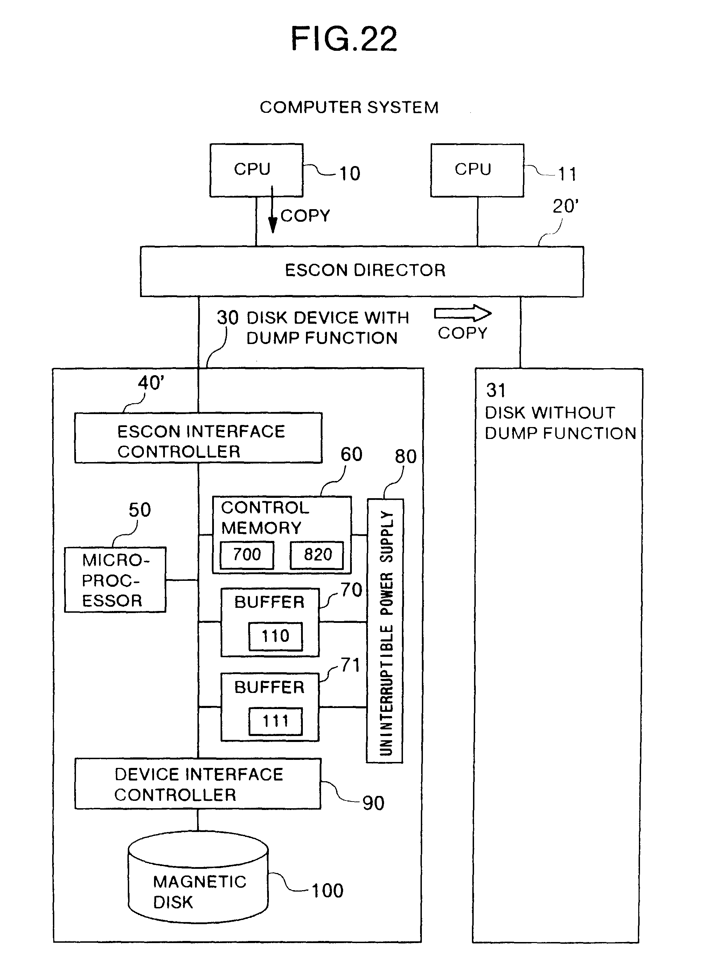

Fig. 22 is a diagram showing the configuration obtained by replacing the SCSI bus with an ESCON director in the computer system of Fig. 1. This system achieves operation similar to that of the first embodiment.

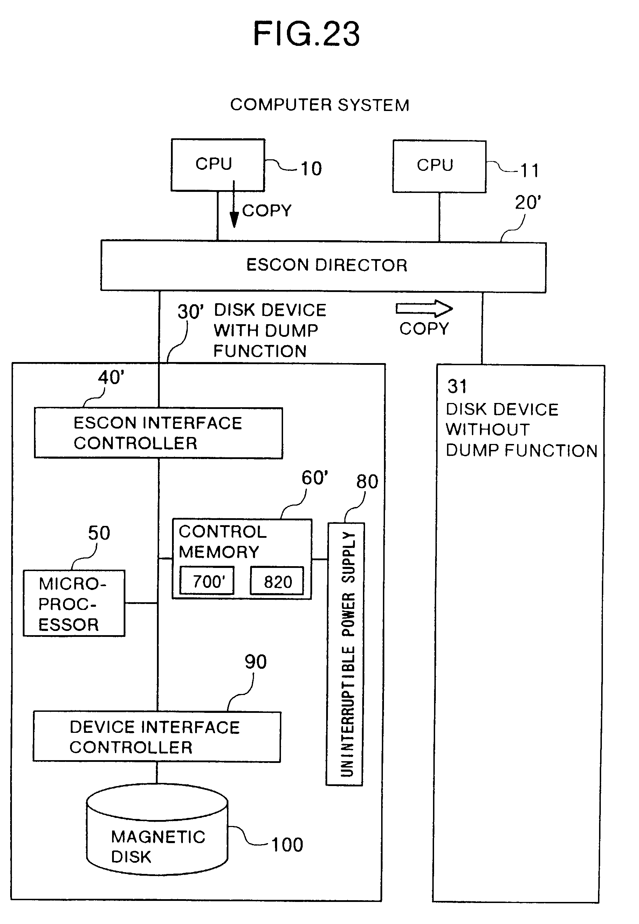

Fig. 23 is a diagram showing the structure attained by replacing the SCSI bus with an ESCON director in the computer system of Fig. 8. The constitution operates in the similar manner as for the second embodiment.

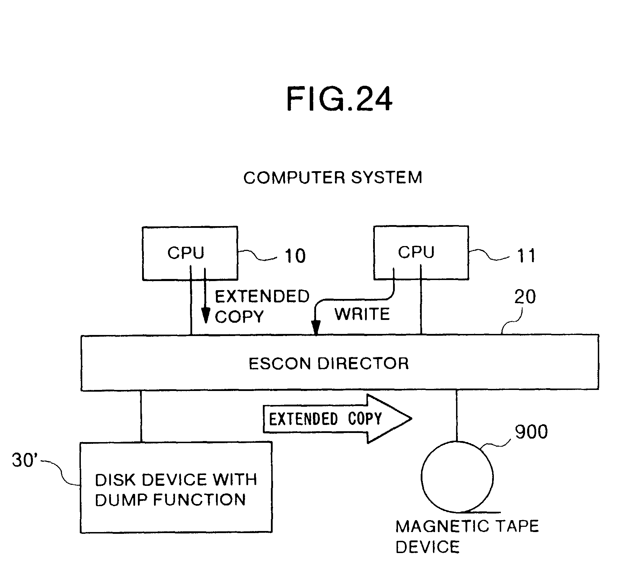

Fig. 24 is a diagram showing the configuration obtained by replacing the SCSI bus with an ESCON director in the computer system of Fig. 13. The system conducts operation similar to that of the third embodiment.

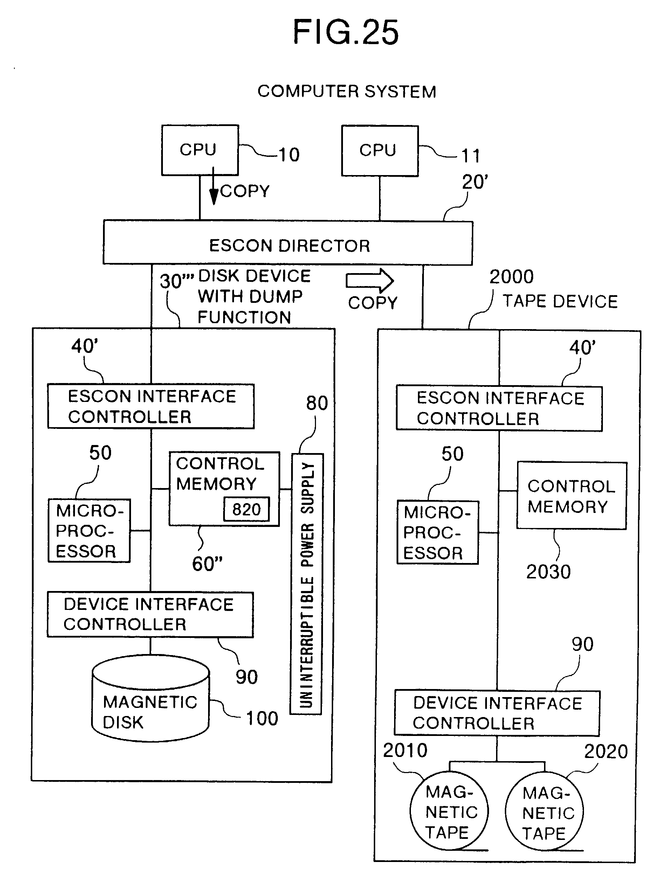

Fig. 25 is a diagram showing the constitution attained by replacing the SCSI bus with an ESCON director in the computer system of Fig. 17. The configuration operates in the similar manner as for the fourth embodiment.

While the present invention has been described with reference to the particular illustrative embodiments, it is not to be restricted by those embodiments but only by the appended claims. It is to be appreciated that those skilled in the art can change or modify the embodiments without departing from the scope of the present invention as defined by the claims.

## Claims

1. A storage device (30) having a function to dump data from a storage medium (100) onto another storage device (31), comprising:
region recognizing means (60, 700, 820, Fig. 4) for discriminatingly recognizing dump objective regions (850) of the storage medium as dumped regions which have undergone a dump operation and not-dumped regions as those which have not undergone a dump operation and discriminatingly recognizing the not-dumped regions as data updated regions which have undergone a data update operation and data not-updated regions as those which have not undergone a data update operation (Fig. 7);
data update means (Figs. 3 and 4) for updating, when a data update request is received for data in other than the data not-updated regions during a period from a dump start point to a dump end point, the pertinent data, saving, when a data update request is received for data in the data not-updated regions, the pertinent data into a buffer (70, 71) and updating thereafter the data in the data not-updated regions, and changing an attribute of a storage region of the data from a data not-updated region to a data updated region;
data transfer means (Figs. 4 and 5) for transferring data for which an update request is not done from the data not-updated region of the storage medium or data from the data updated region to a dump destination storage device in a predetermined sequence and changing an attribute of a storage region of the transferred data from a data not-dumped region to a dumped region; and
saved data transfer means (Figs. 4 to 6) for transferring the data saved in the buffer to the dump destination storage device at a predetermined opportunity, changing an attribute of the storage region of the data from a not-dumped region to a dumped region, and substantially erasing the data from the buffer.

2. A storage device according to Claim 1, wherein the opportunity at which the data saved in the buffer is transferred to the dump destination storage device is the earlier one of an opportunity to transfer the pertinent data to the dump destination storage device when a quantity of data saved in the buffer exceeds a predetermined quantity and an opportunity to transfer the pertinent data to the dump destination storage device when an update request is not done for the pertinent data (Fig. 1, 60).

3. A storage device according to Claim 1, wherein the opportunity at which the data saved in the buffer is transferred to the dump destination storage device is an opportunity to transfer the pertinent data to the dump destination storage device when the ratio of the quantity of data saved in the buffer to the capacity of the buffer exceeds a predetermined value (Fig. 1, 60).

4. A storage device according to Claim 1, wherein the opportunity at which the data saved in the buffer is transferred to the dump destination storage device is an opportunity to transfer the pertinent data to the dump destination storage device when an update request is not done for the pertinent data (Fig. 1, 60).

5. A storage device according to Claim 1, wherein the opportunity at which the data saved in the buffer is transferred to the dump destination storage device is an opportunity between a point of time immediately after the data is saved in the buffer and a point of time immediately before the update request for the data is terminated (Fig. 1, 60).

6. A storage device according to Claim 1, wherein the opportunity at which the data saved in the buffer is transferred to the dump destination storage device is an opportunity which appears at a predetermined interval (Fig. 1, 60).

7. A storage device according to Claim 1, wherein the buffer is duplicated (70, 71), or nonvolatile (70, 71, 80).

8. A storage device (30') having a function to dump data from a storage medium (100) onto another storage device (31), comprising:
region recognizing means (60', 700', 820, Fig. 10) for discriminatingly recognizing dump objective regions (850) of the storage medium as dumped regions which have undergone a dump operation and not-dumped regions which have not undergone a dump operation;
data transfer means (700', 820, Figs. 9 and 11) for transferring data from the not-dumped region of the storage medium to a dump destination storage device in a predetermined sequence, changing when a data update request is not done an attribute of a storage region of the transferred data from a not-dumped region to a dumped region, transferring, when a data update request is received for data in the data not-dumped regions during a period from a dump start point to a dump end point, the pertinent data with a higher priority to the dump destination storage device, and changing an attribute of a storage region of the data from a not-dumped region to a dumped region; and
data update means (Figs. 7, 10, and 12) for updating, when a data update request is received for data in other than the not-dumped regions during a period from the dump start point to the dump end point, the pertinent data and updating, when a data update request is received for data in the not-dumped regions, the data in the not-dumped regions after the high priority transfer by the data transfer means.

9. A storage device according to Claim 1 or 8,
wherein the storage area (852) of the dump destination storage device to which the dump objective data is transferred is commonly used as the storage area (852) to which the data in the data not-updated regions is transferred when the update request is not done for the data (Figs. 10 and 11).

10. A storage device according to Claim 1 or 8,
wherein the storage area (852) of the dump destination storage device to which the dump objective data is transferred is an area (852) next to an area to which another data is transferred immediately before a transfer thereof (Figs. 10 and 11).

11. A storage device according to Claim 10,
further including identifier adder means for adding to the dump objective data an identifier including a logical block address (LBA; 1102) indicating a storage area on a source storage medium of the data, thereby preparing data (1100) to be transferred to the dump destination storage device.

12. A storage device according to Claim 11,
wherein the identifier (1102) includes information of time such as "update time" and/or "dump time" of the pertinent data.

13. A storage device according to Claim 1 or 8,
further including data restore means for restoring from data stored in the dump destination device data stored in the dump source device before the dump start point (Fig. 16).

14. A storage device according to Claim 1 or 8,
wherein an interface (40) for establishing connection between the storage device and the CPU conforms to SCSI standards.

15. A storage device according to Claim 1 or 8,
wherein in the storage device (31) as the dump destination, a storage media (2010) for storing data of the not-updated regions is different from a storage medium (2020) for storing data saved in the buffers.

16. A storage device according to Claim 15,
further including identifier adding means for adding, for the data saved in the buffer or the data for which the data update request is received, an identifier containing a logical block address (LBA; 1102) indicating a storage area on the original storage medium of the data as data (1100) to be transferred to the storage device of the dump destination.

## Patentansprüche

1. Speichervorrichtung (30) mit der Funktion, Daten aus einem Speichermedium (100) auf eine andere Speichervorrichtung (31) abzuwerfen, mit
einer Bereichs-Erkennungseinrichtung (60, 700, 820, Figur 4) zum unterscheidenden Erkennen von Abwurf-Objektbereichen (850) des Speichermediums als abgeworfene Bereiche, die einen Abwerfvorgang durchlaufen haben, und nicht-abgeworfene Bereiche, die einen Abwerfvorgang nicht durchlaufen haben, sowie zum unterscheidenden Erkennen der nicht-abgeworfenen Bereiche als aktualisierte Datenbereiche, die einen Daten-Aktualisiervorgang durchlaufen haben, und nicht-aktualisierte Datenbereiche, die einen Daten-Aktualisiervorgang nicht durchlaufen haben (Figur 7),
einer Daten-Aktualisiereinrichtung (Figur 3 und 4), die dann, wenn während eines Zeitraums vom Abwurf-Anfangspunkt bis zum Abwurf-Endpunkt eine Daten-Aktualisieranforderung für Daten empfangen wird, die von Daten in den nicht-aktualisierten Datenbereichen verschieden sind, die jeweiligen Daten aktualisiert, dann, wenn für Daten in den nicht-aktualisierten Datenbereichen eine Daten-Aktualisieranforderung empfangen wird, die jeweiligen Daten in einem Puffer (70, 71) aufbewahrt und anschließend die Daten in den nicht-aktualisierten Datenbereichen aktualisiert und ein Attribut eines Speicherbereichs der Daten von einem nicht-aktualisierten Datenbereich in einen aktualisierten Datenbereich ändert,
einer Datenübertragungseinrichtung (Figur 4 und 5), die Daten, für die eine Aktualisieranforderung nicht vorliegt, aus dem nicht-aktualisierten Datenbereich des Speichermediums oder Daten aus dem aktualisierten Datenbereich in vorgegebener Reihenfolge in eine Abwurfziel-Speichereinrichtung überträgt und ein Attribut eines Speicherbereichs der übertragenen Daten von einem nicht-abgeworfenen Datenbereich in einen abgeworfenen Bereich ändert, und
einer Übertragungseinrichtung für aufbewahrte Daten (Figur 4 bis 6), die die in dem Puffer aufbewahrten Daten bei einer vorgegebenen Gelegenheit in die Abwurfziel-Speichereinrichtung überträgt, ein Attribut des Speicherbereichs der Daten von einem nicht-abgeworfenen Bereich in einen abgeworfenen Bereich ändert und die Daten in dem Puffer im wesentlichen löscht.

2. Speichervorrichtung nach Anspruch 1, wobei die Gelegenheit, bei der die in dem Puffer aufbewahrten Daten in die Abwurfziel-Speichereinrichtung übertragen werden, die frühere zweier Gelegenheiten ist, deren eine zur Übertragung der jeweiligen Daten an die Abwurfziel-Speichereinrichtung besteht, wenn die Menge an in dem Puffer aufbewahrten Daten eine vorgegebene Menge überschreitet, und deren andere zur Übertragung der jeweiligen Daten an die Abwurfziel-Speichereinrichtung besteht, wenn für die jeweiligen Daten eine Aktualisieranforderung nicht vorliegt (Figur 1, 60).

3. Speichervorrichtung nach Anspruch 1, wobei die Gelegenheit, bei der die in dem Puffer aufbewahrten Daten an die Abwurfziel-Speichereinrichtung übertragen werden, die Gelegenheit ist, bei der die jeweiligen Daten an die Abwurfziel-Speichereinrichtung übertragen werden, wenn das Verhältnis aus der Menge an in dem Puffer aufbewahrten Daten zur Kapazität des Puffers einen Vorgabewert überschreitet (Figur 1, 60).

4. Speichervorrichtung nach Anspruch 1, wobei die Gelegenheit, bei der die in dem Puffer aufbewahrten Daten an die Abwurfziel-Speichereinrichtung übertragen werden, die Gelegenheit ist, bei der die jeweiligen Daten an die Abwurf-Zielspeicheradresse übertragen werden, wenn für die jeweiligen Daten eine Aktualisieranforderung nicht vorliegt (Figur 1, 60).

5. Speichervorrichtung nach Anspruch 1, wobei die Gelegenheit, bei der die in dem Puffer aufbewahrten Daten an die Abwurfziel-Speichereinrichtung übertragen werden, eine Gelegenheit zwischen einem Zeitpunkt unmittelbar nach dem Aufbewahren der Daten in dem Puffer und einem Zeitpunkt unmittelbar vor Beendigung der Aktualisieranforderung für die Daten ist (Figur 1, 60).

6. Speichervorrichtung nach Anspruch 1, wobei die Gelegenheit, bei der die in dem Puffer aufbewahrten Daten an die Abwurfziel-Speichereinrichtung übertragen werden, eine in einem vorgegebenen Intervall auftretende Gelegenheit ist (Figur 1, 60).

7. Speichervorrichtung nach Anspruch 1, wobei der Puffer zweifach vorhanden (70, 71) oder nicht-flüchtig (70, 71, 80) ist.

8. Speichervorrichtung (30') mit der Funktion, Daten aus einem Speichermedium (100) auf eine andere Speichervorrichtung (31) abzuwerfen, mit
einer Bereichs-Erkennungseinrichtung (60', 700', 820, Figur 10) zum unterscheidenden Erkennen von Abwurf-Objektbereichen (850) des Speichermediums als abgeworfene Bereiche, die einen Abwerfvorgang durchlaufen haben, und nicht-abgeworfene Bereiche, die einen Abwerfvorgang nicht durchlaufen haben,
einer Datenübertragungseinrichtung (700', 820, Figur 9 und 11), die Daten von dem nicht-abgeworfenen Bereich des Speichermediums in vorgegebener Reihenfolge an eine Abwurfziel-Speichereinrichtung überträgt, die dann, wenn eine Daten-Aktualisieranforderung nicht vorliegt, ein Attribut eines Speicherbereichs der übertragenen Daten von einem nicht-abgeworfenen Bereich in einen abgeworfenen Bereich ändert, die dann, wenn während eines Zeitraums von einem Abwurf-Anfangspunkt bis zu einem Abwurf-Endpunkt eine Daten-Aktualisieranforderung für Daten in den nicht-abgeworfenen Datenbereichen empfangen wird, die jeweiligen Daten mit höherer Priorität an die Abwurfziel-Speichereinrichtung überträgt, und die ein Attribut eines Speicherbereichs der Daten von einem nicht-abgeworfenen Bereich in einen abgeworfenen Bereich ändert, und
einer Daten-Aktualisiereinrichtung (Figur 7, 10 und 12), die dann, wenn während eines Zeitraums vom Abwurf-Anfangspunkt bis zum Abwurf-Endpunkt eine Daten-Aktualisieranforderung für Daten empfangen wird, die von Daten in den nicht-abgeworfenen Bereichen verschieden sind, die jeweiligen Daten aktualisiert und dann, wenn eine Daten-Aktualisieranforderung für Daten in den nicht-abgeworfenen Bereichen empfangen wird, die Daten in den nicht-abgeworfenen Bereichen aktualisiert, nachdem die Datenübertragungseinrichtung die Übertragung mit hoher Priorität durchgeführt hat.

9. Speichervorrichtung nach Anspruch 1 oder 8, wobei der Speicherbereich (852) der Abwurfziel-Speichereinrichtung, an die die Abwurf-Objektdaten übertragen werden, gemeinsam als Speicherbereich (852) benutzt wird, an den die Daten in den nicht-aktualisierten Datenbereichen übertragen werden, wenn die Aktualisieranforderung für die Daten nicht vorliegt (Figur 10 und 11).

10. Speichervorrichtung nach Anspruch 1 oder 8, wobei der Speicherbereich (852) der Abwurfziel-Speichereinrichtung, an die die Abwurf-Objektdaten übertragen werden, ein Bereich (852) neben demjenigen Bereich ist, an den andere Daten unmittelbar vor der Übertragung übertragen werden (Figur 10 und 11).

11. Speichervorrichtung nach Anspruch 10 mit einer Kennzeichnungseinrichtung, die den Abwurf-Objektdaten eine Kennung hinzufügt, die eine einen Speicherbereich in einem Quellenspeichermedium der Daten angebende logische Blockadresse (LBA; 1102) enthält, womit die an die Abwurfziel-Speichereinrichtung zu übertragenden Daten (1100) vorbereitet werden.

12. Speichervorrichtung nach Anspruch 11, wobei die Kennung (1102) Zeitinformationen, wie "Aktualisierzeit" und/oder "Abwurfzeit", der jeweiligen Daten enthält.

13. Speichervorrichtung nach Anspruch 1 oder 8, mit einer Datenwiederherstelleinrichtung, die aus in der Abwurf-Zielvorrichtung gespeicherten Daten solche Daten wiederherstellt, die vor dem Abwurf-Anfangspunkt in der Abwurf-Quellenvorrichtung gespeichert waren (Figur 16).

14. Speichervorrichtung nach Anspruch 1 oder 8, wobei eine zur Verbindung zwischen der Speichervorrichtung und dem Zentralrechner dienende Schnittstelle (40) der SCSI-Norm entspricht.

15. Speichervorrichtung nach Anspruch 1 oder 8, wobei in der als Abwurfziel dienenden Speichervorrichtung (31) ein Speichermedium (2010) zum Speichern von Daten der nicht-aktualisierten Bereiche von einem Speichermedium (2020) zum Speichern von in den Puffern aufbewahrten Daten verschieden ist.

16. Speichervorrichtung nach Anspruch 15, mit einer Kennzeichnungseinrichtung, die den in dem Puffer aufbewahrten Daten oder den Daten, für die eine Daten-Aktualisieranforderung empfangen wurde, eine Kennung hinzufügt, die eine logische Blockadresse (LBA; 1102) enthält, die einen Speicherbereich des ursprünglichen Speichermediums der Daten als an die Abwurfziel-Speichereinrichtung zu übertragenden Daten (1100) angibt.

## Revendications

1. Dispositif de mémorisation (30) possédant une fonction pour vider des données depuis un support de mémorisation (100) sur un autre dispositif de mémorisation (31), comportant :
des moyens de reconnaissance de région (60, 700, 820, figure 4) pour reconnaître d'une manière discriminatoire des régions cibles de vidage (850) du support de mémorisation comme étant des régions vidées qui ont été soumises à une opération de vidage et comme étant des régions non-vidées qui n'ont pas été soumises à une opération de vidage et pour reconnaître d'une manière discriminatoire les régions non-vidées comme étant des régions de données actualisées qui ont été soumises à une opération d'actualisation de données et comme étant des régions de données non-actualisées qui n'ont pas été soumises à une opération d'actualisation de données (figure 7),
des moyens d'actualisation de données (figures 3 et 4) pour actualiser les données pertinentes lorsqu'une demande d'actualisation de données est reçue concernant des données mémorisées dans des régions autres que les régions de données non-actualisées durant une période allant d'un point de début de vidage jusqu'à un point de fin de vidage, sauvegarder les données pertinentes dans un tampon (70, 71) lorsqu'une demande d'actualisation de données est reçue concernant des données mémorisées dans les régions de données non-actualisées, et actualiser ensuite les données mémorisées dans les régions de données non-actualisées, et modifier un attribut d'une région de mémorisation de données de manière à ce qu'il n'indique plus une région de données non-actualisée mais une région de données actualisée,
des moyens de transfert de données (figures 4 et 5) pour transférer les données de la région de données non-actualisée du support de mémorisation pour lesquelles une demande d'actualisation n'est pas émise ou les données de la région de données actualisée vers un dispositif de mémorisation destinataire du vidage suivant une séquence prédéterminée et modifier un attribut d'une région de mémorisation dont les données ont été transférées afin qu'il indique non plus une région de données non-vidée, mais une région vidée, et
des moyens de transfert de données sauvegardées (figures 4 à 6) pour transférer les données sauvegardées dans le tampon vers le dispositif de mémorisation destinataire du vidage lors de la survenue d'une opportunité prédéterminée, modifier un attribut de la région de mémorisation des données afin qu'il indique non plus une région non-vidée, mais une région vidée, et effacer substantiellement les données du tampon.

2. Dispositif de mémorisation selon la revendication 1, dans lequel l'opportunité lors de laquelle les données sauvegardées dans le tampon sont transférées vers le dispositif de mémorisation destinataire du vidage est la première à se présenter parmi une opportunité de transférer les données pertinentes vers le dispositif de mémorisation destinataire du vidage lorsqu'un volume de données sauvegardées dans le tampon excède un volume prédéterminé et une opportunité de transférer les données pertinentes vers le dispositif de mémorisation destinataire du vidage lorsqu'une demande d'actualisation n'est pas émise pour les données pertinentes (figure 1, 60).

3. Dispositif de mémorisation selon la revendication 1, dans lequel l'opportunité lors de laquelle les données sauvegardées dans le tampon sont transférées vers le dispositif de mémorisation destinataire du vidage est une opportunité de transférer les données pertinentes vers le dispositif de mémorisation destinataire du vidage lorsque le rapport du volume des données sauvegardées dans le tampon sur la capacité du tampon excède une valeur prédéterminée (figure 1, 60).

4. Dispositif de mémorisation selon la revendication 1, dans lequel l'opportunité lors de laquelle les données sauvegardées dans le tampon sont transférées vers le dispositif de mémorisation destinataire du vidage est une opportunité de transférer les données pertinentes vers le dispositif de mémorisation destinataire du vidage lorsqu'une demande d'actualisation n'est pas émise pour les données pertinentes (figure 1, 60).

5. Dispositif de mémorisation selon la revendication 1, dans lequel l'opportunité lors de laquelle les données sauvegardées dans le tampon sont transférées vers le dispositif de mémorisation destinataire du vidage est une opportunité qui se présente entre un instant immédiatement consécutif à l'instant où les données sont sauvegardées dans le tampon et un instant qui précède immédiatement l'instant où se termine la demande d'actualisation des données (figure 1, 60).

6. Dispositif de mémorisation selon la revendication 1, dans lequel l'opportunité lors de laquelle les données sauvegardées dans le tampon sont transférées vers le dispositif de mémorisation destinataire du vidage est une opportunité qui apparaît à un intervalle prédéterminé (figure 1, 60).

7. Dispositif de mémorisation selon la revendication 1, dans lequel le tampon est prévu en deux exemplaires (70, 71), ou est non-volatile (70, 71, 80).

8. Dispositif de mémorisation (30') possédant une fonction pour vider des données depuis un support de mémorisation (100) sur un autre dispositif de mémorisation (31), comportant :
des moyens de reconnaissance de région (60', 700', 820, figure 10) pour reconnaître d'une manière discriminatoire des régions cibles de vidage (850) du support de mémorisation comme étant des régions vidées qui ont été soumises à une opération de vidage et des régions non-vidées qui n'ont pas été soumises à une opération de vidage,
des moyens de transfert de données (700', 820, figures 9 et 11) pour transférer des données de la région non-vidée du support de mémorisation vers un dispositif de mémorisation destinataire du vidage suivant une séquence prédéterminée, modifier, lorsqu'une demande d'actualisation de données n'est pas émise, un attribut d'une région de mémorisation dans laquelle se trouvaient les données transférées afin qu'il indique non plus une région non-vidée, mais une région vidée, transférer, lorsqu'une demande d'actualisation de données est reçue pour des données mémorisées dans les régions de données non-vidées durant une période allant d'un point de début de vidage jusqu'à un point de fin de vidage, les données pertinentes prioritairement vers le dispositif de mémorisation destinataire du vidage, et modifier un attribut d'une région de mémorisation des données afin qu'il indique non plus une région non-vidée, mais une région vidée, et
des moyens d'actualisation de données (figures 7, 10 et 12) pour actualiser les données pertinentes lorsqu'une demande d'actualisation de données est reçue pour des données mémorisées dans des régions autres que les régions non-vidées durant une période allant du point de début de vidage jusqu'au point de fin de vidage, et actualiser, lorsqu'une demande d'actualisation de données est reçue pour des données mémorisées dans les régions non-vidées, les données mémorisées dans les régions non-vidées après le transfert prioritaire effectué par les moyens de transfert de données.

9. Dispositif de mémorisation selon la revendication 1 ou 8, dans lequel la zone de mémorisation (852) du dispositif de mémorisation destinataire du vidage vers laquelle les données cibles de vidage sont transférées est également utilisée comme zone de mémorisation (852) vers laquelle les données des régions de données non-actualisées sont transférées lorsque la demande d'actualisation n'est pas émise pour les données (figures 10 et 11).

10. Dispositif de mémorisation selon la revendication 1 ou 8, dans laquelle la zone de mémorisation (852) du dispositif de mémorisation destinataire du vidage vers laquelle les données cibles du vidage sont transférées est une zone (852) située près d'une zone vers laquelle d'autres données ont été transférées immédiatement avant leur transfert (figures 10 et 11).

11. Dispositif de mémorisation selon la revendication 10, comportant en outre des moyens d'adjonction d'identificateur pour adjoindre aux données cibles de vidage un identificateur comportant une adresse de bloc logique (LBA ; 1102) indiquant une zone de mémorisation sur un support de mémorisation source des données, pour préparer ainsi les données (1100) à être transférées vers le dispositif de mémorisation destinataire du vidage.

12. Dispositif de mémorisation selon la revendication 11, dans lequel l'identificateur (1102) comporte des informations temporelles telles que le "temps d'actualisation" et/ou le "temps de vidage" des données pertinentes.

13. Dispositif de mémorisation selon la revendication 1 ou 8, comportant en outre des moyens de restauration de données pour restaurer à partir des données mémorisées dans le dispositif destinataire du vidage les données mémorisées dans le dispositif source de vidage avant le point de début de vidage (figure 16).

14. Dispositif de mémorisation selon la revendication 1 ou 8, dans lequel une interface (40) pour établir une connexion entre le dispositif de mémorisation et la CPU satisfait aux normes SCSI.

15. Dispositif de mémorisation selon la revendication 1 ou 8, dans lequel, dans le dispositif de mémorisation (31) servant de destinataire du vidage, un support de mémorisation (2010) pour mémoriser les données des régions non-actualisées est différent d'un support de mémorisation (2020) pour mémoriser les données sauvegardées dans les tampons.

16. Dispositif de mémorisation selon la revendication 15, comportant en outre des moyens d'adjonction d'identificateur pour adjoindre, pour les données sauvegardées dans le tampon ou les données pour lesquelles la demande d'actualisation de données a été reçue, un identificateur contenant une adresse de bloc logique (LBA ; 1102) indiquant une zone de mémorisation, sur le support de mémorisation initial de données, comme correspondant aux données (1100) à transférer vers le dispositif de mémorisation de la destination du vidage.
